# EUROPEAN PATENT SPECIFICATION

(11) **EP 4 027 239 B1**
(45) Date of publication and mention of the grant of the patent: **09.08.2023**
(21) Application number: 21150466.7
(22) Date of filing: 07.01.2021
(51) Int. Cl.: G06F 9/455, G06F 11/30, G06F 11/36

(54) **METHOD FOR OPERATING A LEGACY SOFTWARE APPLICATION TOGETHER WITH AN INTERCEPTION-BASED OR INSTRUMENTATION-BASED AGENT FUNCTIONALITY, SYSTEM OR COMPUTING OR EXECUTION ENVIRONMENT FOR OPERATING A LEGACY SOFTWARE APPLICATION, AGENT FUNCTIONALITY FOR BEING OPERATED OR RUNNING TOGETHER WITH A LEGACY SOFTWARE APPLICATION WITHIN A COMPUTING OR EXECUTION ENVIRONMENT, BYTECODE-OBJECT-TO-INTERFACE-OBJECT CONVERTER OR INTERFACE-OBJECT-TO-BYTECODE-OBJECT CONVERTER, PROGRAM AND COMPUTER PROGRAM PRODUCT**
VERFAHREN ZUM BETRIEB EINER ÄLTEREN SOFTWARE-ANWENDUNG ZUSAMMEN MIT EINER ABHÖR- ODER INSTRUMENTIERUNGSBASIERTEN AGENTENFUNKTIONALITÄT, SYSTEM ODER RECHEN- ODER AUSFÜHRUNGSUMGEBUNG ZUM BETRIEB EINER ÄLTEREN SOFTWARE-ANWENDUNG, AGENTENFUNKTIONALITÄT ZUM BETRIEB ODER ZUR AUSFÜHRUNG ZUSAMMEN MIT EINER ÄLTEREN SOFTWARE-ANWENDUNG INNERHALB EINER RECHEN- ODER AUSFÜHRUNGSUMGEBUNG, BYTE-CODE-OBJEKT-ZU-SCHNITTSTELLEN-OBJEKT-WANDLER ODER SCHNITTSTELLEN-OBJEKT-ZU-BYTE-CODE-OBJEKT-WANDLER, PROGRAMM UND COMPUTERPROGRAMMPRODUKT
PROCÉDÉ D'EXPLOITATION D'UNE APPLICATION LOGICIELLE PATRIMONIALE AVEC UNE FONCTIONNALITÉ D'AGENT BASÉE SUR L'INTERCEPTION OU L'INSTRUMENTATION, SYSTÈME OU ENVIRONNEMENT DE CALCUL OU D'EXÉCUTION POUR EXPLOITER UNE APPLICATION LOGICIELLE PATRIMONIALE, FONCTIONNALITÉ D'AGENT POUR ÊTRE EXPLOITÉE OU FONCTIONNER AVEC UNE APPLICATION LOGICIELLE PATRIMONIALE DANS UN ENVIRONNEMENT DE CALCUL OU D'EXÉCUTION, CONVERTISSEUR CODE À OCTETS-OBJET-OBJET-INTERFACE-OBJET OU CONVERTISSEUR INTERFACE-OBJET-CODE À OCTETS-OBJET, PROGRAMME ET PRODUIT PROGRAMME INFORMATIQUE

(43) Date of publication of application: 13.07.2022
(73) Proprietor: Deutsche Telekom AG, 53113 Bonn (DE)
(72) Inventor: PLETTSCHER, Wolfram, 53797 Lohmar (DE); COSKUN, Hakan, 13593 Berlin (DE); LOHRMANN, Tom, 90431 Nürnberg (DE)
(74) Representative: Schwöbel, Thilo K.

(56) References cited:
- US-A1- 2013 145 349
- US-A1- 2013 152 064

## Description

### FIELD OF THE INVENTION

The present invention relates to the field of operating a legacy software application, executed by running bytecode within a computing or execution environment, by means of an instrumentation-based agent functionality.

### BACKGROUND

Ageing information technology (IT) infrastructure is presently run and maintained by many businesses and/or corporations. Such systems or IT infrastructure often support(s) important and especially critical parts of the respective business activity, hence their modification and/or update bears a comparatively high risk. While 20 years ago, IT systems were built to stay stable for years, changes in all business areas requested to adapt the IT systems to new requirements, especially with more and more people being involved, and often without a refresh regarding the systems' architecture, but, instead, applying patch after patch in order to get new functionality into such systems, resulting in such systems typically growing to unmanageable monolithic applications, with - due to ageing - only few people left being able to provide full support of such old systems or applications.

With such ageing systems or applications, especially due to conventional slow processes and organizations (such as vertical silo organizations), only three to four releases of a given application are often published or released per year. This often leads to an immense functionality backlog, and even hiring people having a lot of experience does not guarantee that such existing systems or applications can be renewed timely and efficiently, especially in case that an entire replacement of such legacy systems and applications by a new system or application is attempted. As such a replacement of the functionalities of the legacy systems and applications often takes quite a lot of time, typically many months or even a certain number of years, when the new (replacement) system or application is ready for launch (and the legacy application should be shut down), the new system or application is already, at least partly, outdated, and additionally, does not behave as planned due to the fact that even months of testing often is not able simulate a production environment completely and accurately enough. Typical consequences include the user experience being rather bad and users lacking training with the new system or application.

Monolithic systems often communicate via defined interfaces to other applications (typically to many of such other applications, up to 2000 thereof). Hence, changes to one application would trigger corresponding changes to be considered regarding the other applications as well, and this typically at exactly the same point of time when the legacy application is switched over to the new application, and, besides that, while developing the new application, there have typically been changes applied

(temporarily) to the old application as well, typically leading to a maintenance disaster to keep old and new requirements in sync. Hence, the failure rate of such software replacement programs, even when carried out by best of breed business consultants, program managers and IT staff, is rather high.

US 2013/145349 A1 (BASAK INDRANIL [US] ET AL) 6 June 2013, describes a technique for updating agent software which controls how the agent adds instrumentation to an application and how the agent process data from the instrumentation.

US 2013/152064 A1 (GAGLIARDI MARCO [US]) 13 June 2013, describes the use of a helper object to allow an agent to access and invoke methods of an application.

### SUMMARY

An object of the present invention is to provide an effective and cost effective solution for operating a legacy software application together with an interception-based or instrumentation-based agent functionality within a computing or execution environment such that using the legacy software application or a part thereof vs. implementing the legacy software application or a part thereof externally is easily possible for different legacy software applications. A further object of the present invention is to provide a corresponding system or a corresponding computing or execution environment, a corresponding agent functionality, a corresponding bytecode-object-to-interface-object converter or interface-object-to-bytecode-object converter, and a corresponding program and computer-readable medium. The invention is defined in the appended claims.

The object of the present invention is achieved by a method for operating a legacy software application, executed by running bytecode within a computing or execution environment, by means of using the legacy software application together with an interception-based or instrumentation-based agent functionality, running on or in the computing or execution environment of the legacy software application and being realized as a generic and configurable agent functionality, especially being agnostic to the legacy software application, wherein the agent functionality is able to intercept or instrument or trigger the execution of the legacy software application's bytecode, wherein by means of intercepting or instrumenting the legacy software application's bytecode the agent functionality is able to interact, dynamically and/or at runtime of the bytecode, with at least one procedure or procedure call as part of the legacy software application, wherein the method comprises the following steps:
-- in a first step, the agent functionality is triggered to be operated together with the legacy software application running on or in the computing or execution environment of the legacy software application,
-- in a second step, subsequent to the first step and at runtime of the agent functionality, the agent functionality intercepts or instruments or triggers the execution of the legacy software application's bytecode with regard to the at least one procedure or procedure call by means of the agent functionality being provided with program flow configuration data such that, dependent on a content of the program flow configuration data, the computing or execution environment executes the at least one procedure or procedure call of the legacy software application under the control of the agent functionality.

It is thereby advantageously possible according to the present invention that a smooth transition from an old system or application (hereinafter called legacy software application) to a new implementation is able to be implemented, thereby especially avoiding any business interruption as there is always the possibility to easily and quickly switch back to the functionality of the legacy software application in case that a new implementation is causing errors. Hence, according to the present invention, an extremely resilient migration or renewal process or workflow is able to be implemented.

Conventionally, a 'smooth transition' typically meant that every three or four months (the release cycle time of a typical legacy software application) the modernization team applies (hopefully small enough) changes to break up the complexity of the monolithic legacy software application; however, once a change (i.e. the switch from the legacy application to the new one) has been performed, there was typically no possibility of any corrections, i.e. the new application either works or not, and some important residual risk remained.

In contrast to the conventionally followed path to renew a legacy software infrastructure, it is advantageously possible according to the present invention to transform aged legacy software applications into more modern IT or software paradigms (such as, especially, the world of cloud-based services and/or the use of microservices) comparatively easily and quickly.

According to the present invention, code injection and instrumentation is used in a generic and reusable way (i.e. applicable to any legacy software application that is able to run within or on the computing or execution environment). The agent functionality, also called lambda agent in the context of the present invention, is agnostic to the legacy software application (some requirements need to be fulfilled) and therefore can be reused, more or less unchanged, in a great variety of different situations. According to the present invention, these results (and the possibility to easily, predictable, smoothly as well as quickly migrate or renew quite important and complex software systems such as legacy software applications) are advantageously able to be realized without changing a single line of source code within the legacy software application (or the monolith) - just another application is launched (i.e. the agent functionality or the lambda agent) side by side of the legacy software application. Without touching the complex legacy system (or legacy software application), it is advantageously possible, according to the present invention, to smoothly migrate to new technologies. If the implementation (in the new technology) is not satisfying (or any change at any point in time is not satisfying), it is easily and quickly - typically within seconds - possible to switch back to a behavior prior to such a change. As a result, it is also advantageously possible, according to the present invention, that test requirements or testing scenarios are able to be reduced or even omitted as it is possible to quickly revert to the legacy (tested) functionality; e.g. in case that the migration refers to an order process (e.g. of a big online retailer or the like) being replaced by a new software, and, after the migration, the number or rate of complaints is raising, a roll back (to the old implementation) is possible, according to the present invention, within seconds. Linked with this possibility to easily and quickly revert to the implementation of the legacy software application, it is also advantageously possible according to the present invention:
-- to dramatically reduce the planning time 'per module' or per functionality or method because any measures are able to be undone very quickly;
-- the implementation of new modules (or new functionality - either as part of the legacy software application, i.e. to be executed within the legacy software application's computing or execution environment, or as part of an external implementation) is not restricted to release cycles of the legacy software application but can be done "at any time" in between (as it is possible to be rolled back at any time);
-- to also dramatically reduce the risk, as it is possible to launch few (new) features very often instead of hundreds / thousands of (new) features a few times per year;
-- that there is no long-term planning / realization phase necessarily any more: At any point in time (e.g. week by week or even day by day), it is possible to incrementally either update or modify procedures or methods or functions within the legacy software application, or to move processes or functions from the legacy software application towards an external execution environment, such that progress is not only visible at any point in time but also that the process is able to be adapted according to newly arising requirements or changes;
-- to reduce backlog, and changes can be applied more quickly or even immediately.

Hence, by means of the approach according to the present invention, it is advantageously possible that IT modernization processes are able to be drastically impacted and optimized, especially with regard to the risks mentioned above.

According to the present invention, the legacy software application is (or needs to be) operated in a computing or execution environment, normally by means of running bytecode or at least a sort of bytecode. In the context of the present invention, the term bytecode (also called intermediate-code or p-code), certainly does neither mean source code (i.e. a collection of code, with or without comments, written using a human-readable programming language, usually as plain text) nor 'machine code' (i.e. machine code, consisting of machine language instructions, being a low-level programming language used to directly control a computer's or machine's central processing unit) but instead a form of instruction set designed for efficient execution by, typically, a software interpreter and, especially, for reduced hardware and operating system dependency by allowing the same code to run cross-platform, on different devices; especially, bytecode according to the present invention corresponds to software code that is directly executed on a virtual machine (a p-code machine i.e., interpreter), especially within or as part of a computing or execution environment.

Hence, according to the present invention, the legacy software application (executed by running bytecode of the legacy software application within the computing or execution environment) is used together with an interception-based or instrumentation-based agent functionality that is running on or in the (same) computing or execution environment of the legacy software application.

According to the present invention, the agent functionality is realized as a generic and configurable agent functionality, especially by means of being agnostic to the legacy software application. This means that the agent functionality is able to be operated - within the computing or execution environment and together with the legacy software application - with any suitable legacy software application (i.e. suitable to be run on or by the computing or execution environment). Hence, the agent functionality itself does not need to be adapted to the respective legacy software application, i.e. in case that a first considered legacy software application (or monolithic legacy application, e.g. of or in a considered corporation) should be migrated or modernized, the identical agent functionality (or corresponding software modules or functionalities) is able to be executed within the computing or execution environment (of this first considered first legacy software application) as it is able to be executed within a further computing or execution environment of a considered second (or further) legacy software application (especially a monolithic legacy application, e.g. of or in the same considered corporation or a further corporation).

In a manner conventionally known, at least in principle, the agent functionality according to the present invention is able to intercept or instrument the execution of the legacy software application's bytecode, wherein by means of intercepting or instrumenting the legacy software application's bytecode the agent functionality is able to interact, dynamically and/or at runtime of the bytecode, with at least one procedure or procedure call as part of the legacy software application. In this respect, the agent functionality uses the interception functionality or instrumentation functionality or introspection functionality as available within the respective computing or execution environment of the legacy software application.

In the context of the present invention, the term procedure or procedure call (being intercepted or instrumented or triggered by the agent functionality) typically refers to the invocation or the call of procedures or methods (or functional parts such as modules) as part of the legacy software application.

According to the present invention, the method comprises at least a first step during which the agent functionality is triggered to be operated together with the legacy software application running on or in the computing or execution environment of the legacy software application. This typically means that the legacy software application needs to be, at least partially, halted from operation, or shut down, especially in order to be able to restart its operation together with the operation of the agent functionality.

In a second step, subsequent to the first step and at runtime of the agent functionality, the agent functionality intercepts or instruments or triggers (or is at least able to intercept or to instrument or to trigger) the execution of the legacy software application's bytecode with regard to the at least one procedure or procedure call by means of the agent functionality being provided with program flow configuration data such that, dependent on a content of the program flow configuration data, the computing or execution environment executes the at least one procedure or procedure call of the legacy software application under the control of the agent functionality.

According to the present invention, the program flow configuration data determines how the agent functionality interacts (and also whether it interacts at all) with the legacy software application on or in the computing or execution environment (of the legacy software application).

This means that the program flow configuration data could have a content such that no interaction (i.e. no interception or instrumentation or triggering) at all happens with the legacy software application running alongside within the computing or execution environment, i.e. the legacy software application is operated (within its computing or execution environment) as if no agent functionality is present at all. Hereinafter, this possibility is also referred to by means of the wording 'non-operation content' of the program flow configuration data. Alternatively, the program flow configuration data could have a content such that it only refers to - i.e. an interaction (such as an interception or instrumentation or triggering) occurs with the legacy software application only with respect to - a single procedure or procedure call of the legacy software application (among, potentially, many procedures, and often (and even typically) a hundred or even several hundreds of such procedures as part of the legacy software application). Still alternatively, the program flow configuration data could have a content such that it refers to - i.e. an interaction (such as an interception or instrumentation or triggering) occurs with the legacy software application with respect to - a plurality of procedures or procedure calls of the legacy software application, even almost all or to all procedures or procedure calls of the legacy software application.

Hence, according to the present invention, it is advantageously possible that a given legacy software application (preferably a monolithic enterprise application) is selected (in fact, any suitable legacy software application might be selected), and the agent functionality or lambda agent (i.e. a comparatively small piece of software) is attached to this legacy software application, i.e. within the legacy software application's computing or execution environment (i.e. the agent functionality runs side by side (especially according to a sidecar pattern, and especially after restarting (especially only a single time) the legacy software application) with the legacy software application). Especially, it is advantageously possible according to the present invention that the agent functionality (or the lambda agent) - by means of the used instrumentation application programming interface - is docked dynamically to or into a running process of the legacy software application (i.e. executing bytecode within the computing or execution environment).

Thereafter, the agent functionality or the lambda agent instruments (or intercepts or triggers) running code (i.e. bytecode) of the legacy system (within the legacy software application's computing or execution environment), controlled by dynamic configuration (i.e. the (content of the) program flow configuration data - that may change over time to be adapted to new requirements, especially triggering hot reloads). The agent functionality or lambda agent will attach to all function calls of the legacy software application, as specified in the (content of the) program flow configuration data, in order to intercept their execution.

According to the present invention, it is advantageously possible that the behavior of code interception is (dynamically) configurable according to the present invention; different call strategies are advantageously able to be provided, enabling the agent functionality (or lambda agent) to decide (or, rather, to decide, by means of dynamically (i.e. at runtime of the bytecode of the legacy software application within the computing or execution environment) adapting the content of the program flow configuration data) whether to call the monolithic function - initially intended, by the intercepted or instrumented or triggered procedure or procedure call - , or alternatively an external piece of software (especially through different network protocols) that finally could replace the (old) function of the legacy software application.
According to the present invention, it is furthermore advantageously possible that values received from the called external services - i.e. the results - are given back to the monolithic application (legacy software application), i.e. the calling function (or procedure) in a way, that the behavior of the monolithic application is not changed in any way. Additionally, it is advantageously possible to compare the results of the procedure call being processed (or executed) either by the old monolith, or by the new service and act appropriately selecting one of the two results as a "source of truth".

Especially, it is advantageously possible according to the present invention that - over time - the list of functions (or procedures or methods) of the legacy software application to be replaced by modern technology is able to be increased, eventually leading to more or less completely replacing the legacy software application, or to reduce the complexity of the functions and tasks of the legacy software application such that a migration scenario or a replacement of the (residual) legacy software application is more easily (and more securely, involving less risk) possible. However, at any point during this process (of increasingly moving functionality off the legacy software application) it is advantageously possible, according to the present invention, to revert - within a few seconds - the decision and switch back (from executing a functionality, or a group of functionalities, by the new micro services implementation back to the old monolithic implementation), especially in case that any failure or error within the new implementation was found.

According to the present invention, it is advantageously possible and preferred that the agent functionality - being agnostic to the legacy software application - interacts with the program flow configuration data such that the agent functionality is able to be configured or parametrized to the legacy software application, wherein especially the identical agent functionality code is able to be used - besides with the legacy software application in connection with the program flow configuration data and executed within the computing or execution environment - with a further legacy software application in connection with a further program flow configuration data and executed within a further computing or execution environment.

It is thereby advantageously possible that the agent functionality is able to be used or applied with respect to any suitable legacy software application.

According to the present invention, it is furthermore advantageously possible and preferred that in the second step, the agent functionality receives, from the legacy software application and upon intercepting the at least one procedure or procedure call during the execution of the legacy software application's bytecode, a request data object - related to the at least one procedure or procedure call of the legacy software application -,
wherein in dependency of the content, at runtime of the agent functionality, of the program flow configuration data, the at least one procedure or procedure call is executed, either internally or externally to the legacy software application, and
wherein a response data object - related to the at least one procedure or procedure call and accepted by the legacy software application - is generated and provided to the legacy software application,
   and/or
wherein in the second step, the agent functionality generates and provides, to the legacy software application, a further request data object - related to the at least one procedure or procedure call of the legacy software application -,
wherein in dependency of the content, at runtime of the agent functionality, of the program flow configuration data, the at least one procedure or procedure call is executed internally to the legacy software application, and
wherein the agent functionality receives, from the legacy software application, a further response data object - related to the at least one procedure or procedure call.

It is thereby advantageously possible according to the present invention that the agent functionality is able to communicate with the legacy software application in both directions, i.e. both in case that a procedure or procedure call occurs in the legacy software application (this procedure or procedure is able to be intercepted by the agent functionality and either executed internally or externally to the legacy software application), and in case that a procedure or procedure call (of the legacy software application) is requested by the agent functionality (or from an external computing resource.

According to the present invention, it is furthermore advantageously possible and preferred that the legacy software application supports interception services or instrumentation services,
wherein especially the interception-based or instrumentation-based agent functionality is based on Java instrumentation services, especially the ByteBuddy Library, and is operated, together with the legacy software application, according to a sidecar pattern, wherein especially the behavior of the agent functionality is able to be modified - at runtime - by means of a modification of the program flow configuration data.

By means of the legacy software application supporting interception services or instrumentation services, it is advantageously possible, according to the present invention, to apply the inventive principle to a vast variety and range of different legacy software applications. Furthermore, by means of the interception-based or instrumentation-based agent functionality being based on Java instrumentation services, especially the ByteBuddy Library, it is advantageously possible, according to the present invention, to comparably easily implement the invention on a Java runtime environment and/or a Java virtual machine environment. Additionally, by means of being able to modify the behavior of the agent functionality, at runtime, by means of a modification of the program flow configuration data, it is advantageously possible, according to the present invention, to flexibly, smoothly and quickly adapt the behavior of the both the agent functionality and the legacy software application such as to be able - without changing a single line of source code within the legacy software application or the agent functionality - to test or probe new or modified implementations of, e.g., a method or procedure or functionality of either the legacy software application or a migrated (new) application in real-time, and, in case such new or modified implementation is not satisfying, to quickly and easily revert and switch back to the legacy behavior prior to such a change. It is especially advantageous to base the implementation of the agent functionality, e.g., on the Java programming language and/or on the Java instrumentation services as the interception or instrumentation service or functionality and/or on corresponding open source technology.

Furthermore, it is advantageously possible and preferred according to the present invention that
-- prior to the second step, the program flow configuration data are initiated or initially generated, and/or
-- during or after the second step, the program flow configuration data are modified, wherein in view of the initiation or generation or modification of the program flow configuration data the legacy software application is assessed or analyzed, especially using a specialized software.

Thereby, it is advantageously possible to automatically assess and/or analyze the legacy software application such as to be able to comparatively easily and quickly arrive at a starting point of the program flow configuration data that defines the behavior of the agent functionality.

Furthermore, it is advantageously possible and preferred according to the present invention that an execution of the at least one procedure or procedure call that is realized internally to the legacy software application involves - after the agent functionality receiving the request data object related to the at least one procedure or procedure call, and providing the further request data object, corresponding to the request data object, to the legacy software application -
-- executing, in dependency of the content of the program flow configuration data, the at least one procedure or procedure call internally to the legacy software application,
-- generating and providing, by the legacy software application, the further response data object related to the at least one procedure or procedure call to the agent functionality, and
-- generating and providing, by the agent functionality and based on the further response data object, the response data object related to the at least one procedure or procedure call and accepted by the legacy software application - to the legacy software application.

Thereby, it is advantageously possible that the execution of the at least one procedure or procedure call internally to the legacy software application is able to be comparatively easily implemented.

According to a further preferred embodiment of the present invention, an execution of the at least one procedure or procedure call that is realized externally to the legacy software application involves - after the agent functionality receiving the request data object related to the at least one procedure or procedure call - the use of external computing resources, especially a further computing or execution environment or cloud computing resources, such that, based on the request data object related to the at least one procedure or procedure call, a request interface or interface object is generated, by the agent functionality, resulting - upon execution of the at least one procedure or procedure call by the external computing resource, especially by means of a microservice, - in a response interface or interface object received by the agent functionality, wherein the response data object related to the at least one procedure or procedure call and accepted by the legacy software application is generated based on the response interface or interface object.

Thereby, it is advantageously possible that the execution of the at least one procedure or procedure call externally to the legacy software application is able to be comparatively easily implemented.

According to a further preferred embodiment of the present invention, the agent functionality comprises a bytecode-object-to-interface-object converter and/or an interface-object-to-bytecode-object converter, wherein the interface-object-to-bytecode-object converter generates the request interface or interface object, or at least a part thereof, based on the request data object, and wherein the interface-object-to-bytecode-object converter generates the response data object, or at least a part thereof, based on the response interface or interface object, wherein the functionality of the bytecode-object-to-interface-object converter and/or of the interface-object-to-bytecode-object converter is realized in a manner being agnostic to the legacy software application.

It is thereby advantageously possible to control the behavior of the agent functionality and of the legacy software application solely by means of modifying the configuration within the program flow configuration data. Furthermore, it is advantageously possible that the same agent functionality (i.e. the same code of the agent functionality) is able to be used independently from the legacy software application, i.e. no adaptation of the agent functionality is advantageously needed for the agent functionality to work with any suitable legacy software application (i.e. such as being able to run or to be executed on the computing or execution environment). By means of the bytecode-object-to-interface-object converter (JSON body builder), a bytecode object is able to be converted, generically, into an interface object.
The bytecode-object-to-interface-object converter preferably generates a generic JSON-string based on the given method parameters (e.g. Java objects) of the intercepted method (the at least one procedure or procedure call), especially using Java reflection API, especially the parsing of the (bytecode) objects being performed without knowledge of the implemented structure of these objects. An example to illustrate the principle thereof is provided in the following: 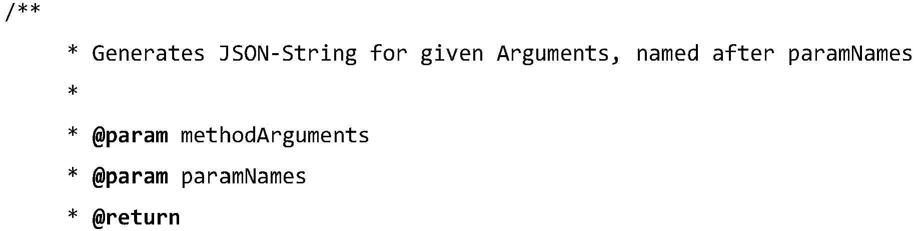 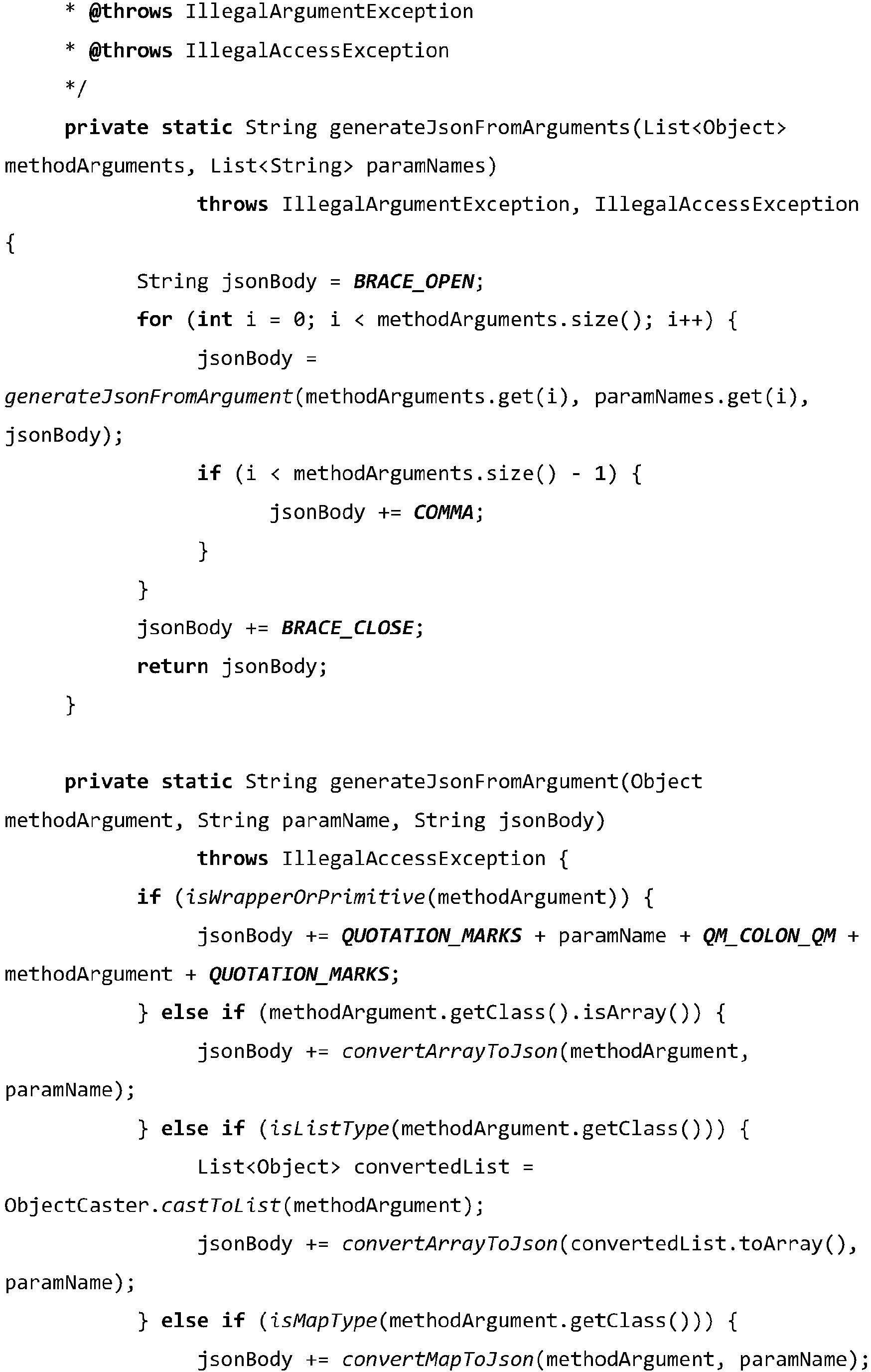 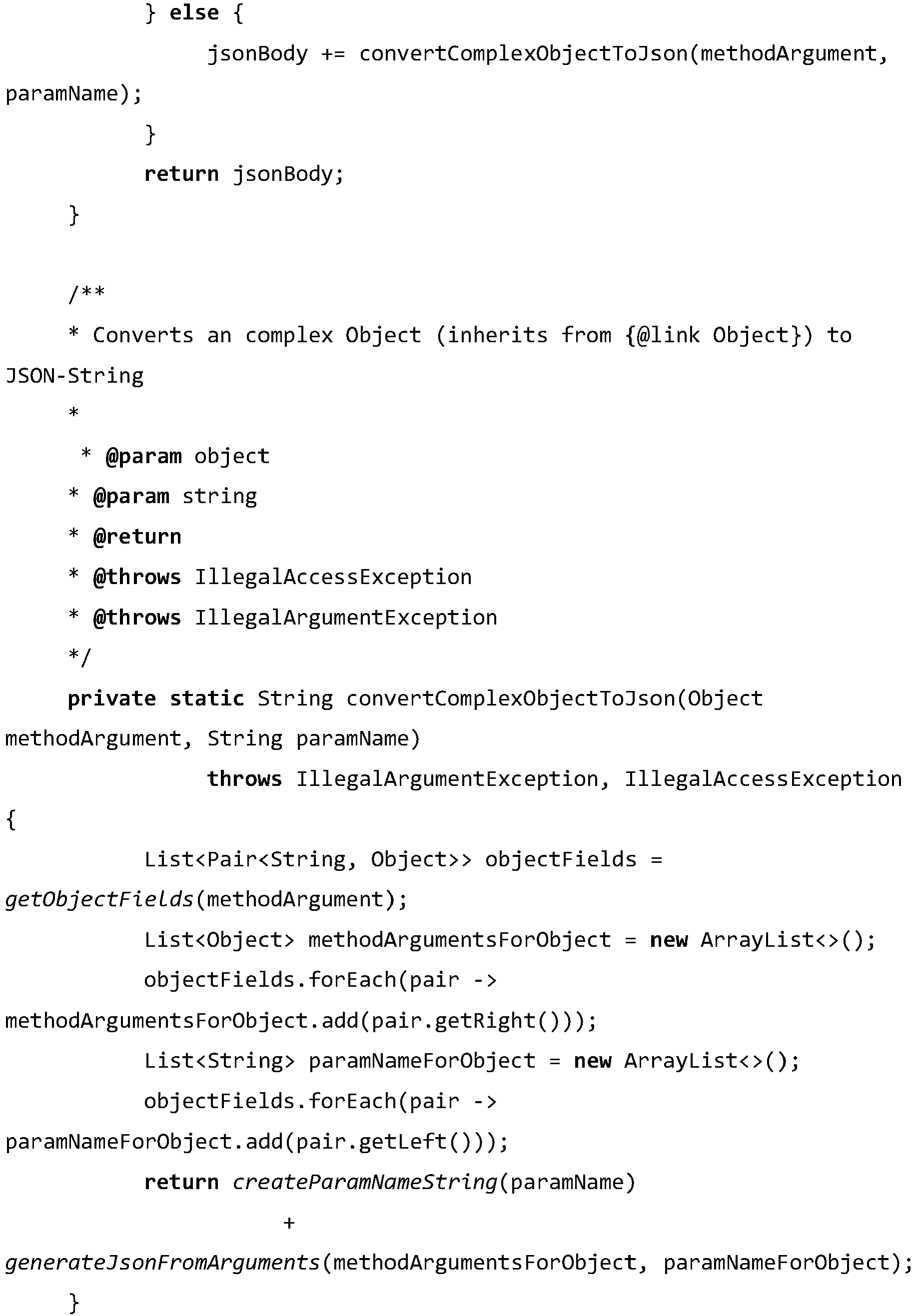 By means of the interface-object-to-bytecode-object converter (JSON to object converter), an interface object is able to be converted, generically, into a bytecode object. The interface-object-to-bytecode-object converter preferably receives a result from a service in JSON-Format, and generates a (bytecode) object of the required return type of the original method of the legacy software application, especially using Java Reflection API.
Especially, the type and structure of these (bytecode) objects are initially unknown to the interface-object-to-bytecode-object converter and are preferably constructed dynamically based on information given by or gathered from the original method and the JSON itself. An example to illustrate the principle thereof is provided in the following:

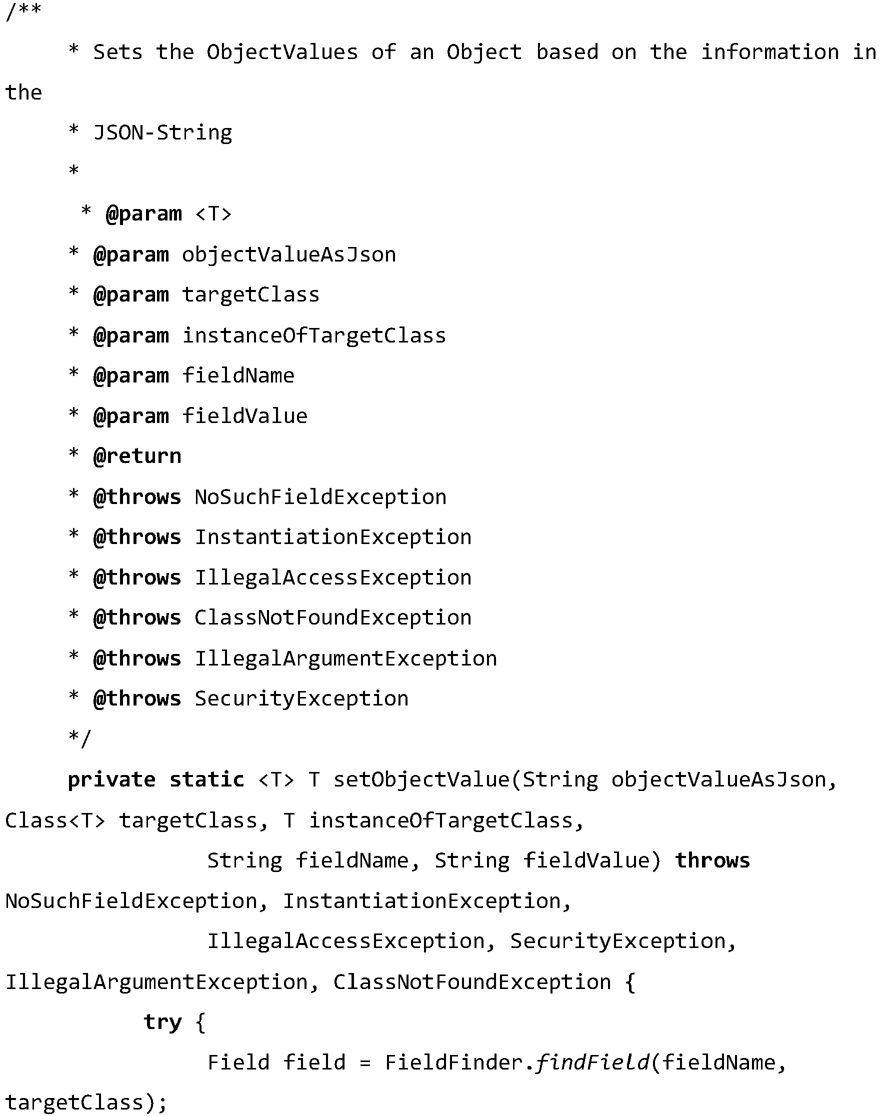

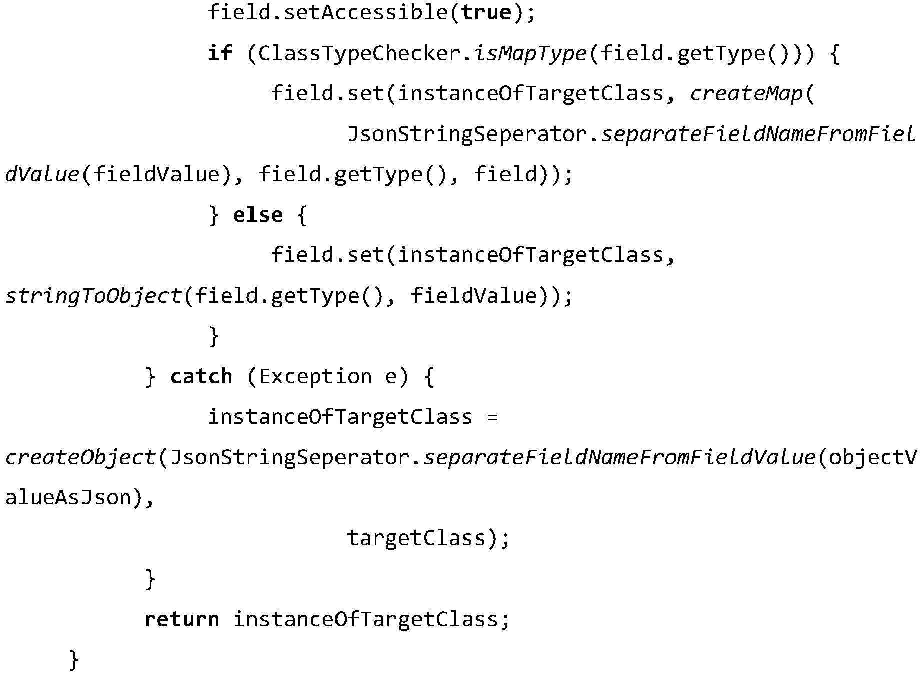

According to a further preferred embodiment of the present invention, the request interface or interface object and/or the response interface or interface object corresponds to or implements a transmission protocol or a transmission protocol application programming interface, especially one or a plurality out of the following:
-- an application programming interface according to the REST, Representational State Transfer, application programming interface standard, especially involving a json structure,
-- an application programming interface according to the gRPC, google Remote Procedure Call, standard.

Furthermore, it is advantageously possible and preferred according to the present invention that instead of or in addition to the execution of the at least one procedure or procedure call externally to the legacy software application, the agent functionality and/or the computing or execution environment and/or the microservice realizes a logging functionality and/or monitoring functionality and/or result comparison functionality and/or key performance indicator measuring functionality related to the at least one procedure or procedure call of the legacy software application, wherein especially the response data object - related to the at least one procedure or procedure call and accepted by the legacy software application, and being generated based on the response interface or interface object - is generated prior to the actual execution of the at least one procedure or procedure call by means of the computing or execution environment or the microservice.

Thereby, it is advantageously possible that the behavior of the agent functionality is able to be flexibly modified and configured such as to be able to smoothly migrate legacy software application-related functionality towards external execution environments.

Furthermore, it is advantageously possible and preferred according to the present invention that an execution of the at least one procedure or procedure call internally and/or externally to the legacy software application and/or the logging functionality and/or the monitoring functionality and/or the result comparison functionality and/or the key performance indicator measuring functionality related to the at least one procedure or procedure call is modifiable, at runtime of the agent functionality, by means of modifying the program flow configuration data only, and especially not by modifying the legacy software application nor the agent functionality.

Furthermore, the present invention relates to a system or computing or execution environment for operating a legacy software application, executed by running bytecode within the computing or execution environment, by means of using the legacy software application together with an interception-based or instrumentation-based agent functionality, running on or in the computing or execution environment of the legacy software application and being realized as a generic and configurable agent functionality, especially being agnostic to the legacy software application, the agent functionality being able to intercept or instrument the execution of the legacy software application's bytecode, wherein by means of intercepting or instrumenting the legacy software application's bytecode the agent functionality is able to interact, dynamically and/or at runtime of the bytecode, with at least one procedure or procedure call as part of the legacy software application, the system or computing or execution environment being configured such that:
-- the agent functionality is triggered to be operated together with the legacy software application running on or in the computing or execution environment of the legacy software application,
-- at runtime of the agent functionality, the agent functionality intercepts or instruments or triggers the execution of the legacy software application's bytecode with regard to the at least one procedure or procedure call by means of the agent functionality being provided with program flow configuration data such that, dependent on a content of the program flow configuration data, the computing or execution environment executes the at least one procedure or procedure call of the legacy software application under the control of the agent functionality,
wherein especially:
the agent functionality receives, from the legacy software application and upon intercepting the at least one procedure or procedure call during the execution of the legacy software application's bytecode, a request data object - related to the at least one procedure or procedure call of the legacy software application -, wherein in dependency of the content, at runtime of the agent functionality, of the program flow configuration data, the at least one procedure or procedure call is executed, either internally or externally to the legacy software application, and wherein a response data object - related to the at least one procedure or procedure call and accepted by the legacy software application - is generated and provided to the legacy software application, and/or
the agent functionality generates and provides, to the legacy software application, a further request data object - related to the at least one procedure or procedure call of the legacy software application -, wherein in dependency of the content, at runtime of the agent functionality, of the program flow configuration data, the at least one procedure or procedure call is executed internally to the legacy software application, and wherein the agent functionality receives, from the legacy software application, a further response data object - related to the at least one procedure or procedure call.

Furthermore, the present invention relates to an agent functionality for being operated or running together with a legacy software application within a computing or execution environment by means of executing bytecode, the agent functionality being interception-based or instrumentation-based and being realized as a generic and configurable agent functionality, especially being agnostic to the legacy software application,
wherein the agent functionality is able to intercept or instrument or trigger the execution of the legacy software application's bytecode, wherein by means of intercepting or instrumenting or triggering the legacy software application's bytecode the agent functionality is able to interact, dynamically and/or at runtime of the bytecode, with at least one procedure or procedure call as part of the legacy software application, the agent functionality being configured such that:
   -- the agent functionality is triggered to be operated together with the legacy software application running on or in the computing or execution environment of the legacy software application,
   -- at runtime of the agent functionality, the agent functionality intercepts or instruments or triggers the execution of the legacy software application's bytecode with regard to the at least one procedure or procedure call by means of the agent functionality being provided with program flow configuration data such that, dependent on a content of the program flow configuration data, the computing or execution environment executes the at least one procedure or procedure call of the legacy software application under the control of the agent functionality,
wherein especially:
   the agent functionality receives, from the legacy software application and upon intercepting the at least one procedure or procedure call during the execution of the legacy software application's bytecode, a request data object - related to the at least one procedure or procedure call of the legacy software application -, wherein in dependency of the content, at runtime of the agent functionality, of the program flow configuration externally to the legacy software application, and wherein a response data object - related to the at least one procedure or procedure call and accepted by the legacy software application - is generated and provided to the legacy software application,
      and/or
   the agent functionality generates and provides, to the legacy software application, a further request data object - related to the at least one procedure or procedure call of the legacy software application -, wherein in dependency of the content, at runtime of the agent functionality, of the program flow configuration data, the at least one procedure or procedure call is executed internally to the legacy software application, and wherein the agent functionality receives, from the legacy software application, a further response data object - related to the at least one procedure or procedure call.

Still additionally, the present invention relates to a bytecode-object-to-interface-object converter or to an interface-object-to-bytecode-object converter, especially as part of an inventive agent functionality, for being operated or running together with a legacy software application, within a computing or execution environment and by means of executing bytecode, wherein the bytecode-object-to-interface-object converter or interface-object-to-bytecode-object converter is realized in a manner being agnostic to the legacy software application.

Additionally, the present invention relates to a program comprising a computer readable program code and/or a computer-readable medium comprising instructions, which, when executed on a computer and/or on a computing or execution environment and/or on cloud computing resources and/or as part of a microservice, or in part on a computing or execution environment and/or in part on cloud computing resources and/or in part as part of a microservice, causes the computer and/or the computing or execution environment and/or the cloud computing resources and/or the microservice to perform an inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a legacy software application being implemented or running on or within a computing or execution environment together with an agent functionality, the agent functionality being linked to external computing resources. Figure 1 additionally shows a further legacy software application being implemented or running on or within a further computing or execution environment.
Figure 2 schematically illustrates the computing or execution environment with the legacy software application and the agent functionality or the agent functionality context.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

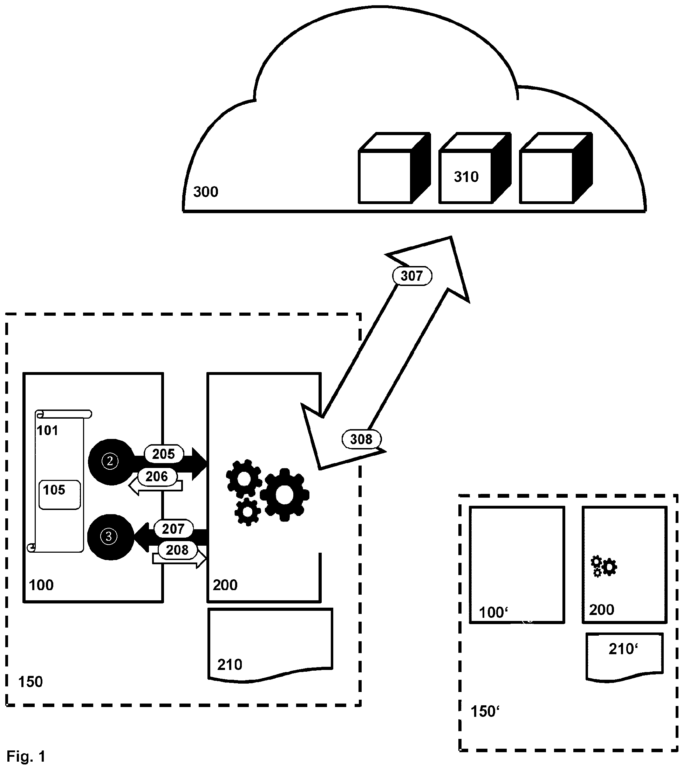

In Figure 1, a legacy software application 100 being implemented or running on or within a computing or execution environment 150 together with an agent functionality 200 is schematically shown. The agent functionality 200 is linked to external computing resources 300. The legacy software application 100 is operated by means of executing or running bytecode within the computing or execution environment 150. The computing or execution environment 150 (or legacy runtime environment or virtual machine) correspond to the environment of both the legacy software application 100, and the agent functionality 200. Legacy (software) applications 100 to be run with the agent functionality 200 (or lambda agent) are not compiled into machine code (processor specific), but exist as bytecode that will be interpreted by the computing or execution environment 150 as runtime environment. This allows instrumentation Services to intercept a given legacy code (i.e. the bytecode of the legacy software application 100) and allow our the agent functionality 200 (or the lambda agent) to redirect (procedure) calls to itself (if configured accordingly) in order to take further decisions.

The legacy software application 100 is typically an application that needs to be renewed, observed or migrated, etc. The (legacy software) application 100 typically has to support interception functionality (i.e. running on a platform or on a virtual machine environment or an interpreter environment allowing or providing for the realization of instrumentation services). For example, the legacy software application 100 corresponds to a Java application or an application being able to be implemented or executed on a Java runtime environment. Another example would refer to Python environments.

The agent functionality 200 - also called lambda agent - is an interception-based or instrumentation-based agent functionality 200, running on or in the computing or execution environment 150 of the legacy software application 100 and being realized as a generic and configurable agent functionality 200, especially being agnostic to the legacy software application 100.

Generally, the agent functionality 200 is able to intercept or instrument or trigger the execution of the legacy software application's bytecode 101. By means of intercepting or instrumenting or triggering the legacy software application's bytecode 101, the agent functionality 200 is able to interact - dynamically and/or at runtime of the bytecode 101 - with at least one procedure 105 or procedure call as part of the legacy software application 100. Hence, by means of the agent functionality 200, configurable and dynamic diversion of code execution is enabled - either within and outside of the legacy (software) application 100. It is to be mentioned that the source code of the legacy (software) application 100 is not touched, i.e. it is not modified by means of any implementation or use or side-by-side operation of the agent functionality 200 and the legacy software application 100.

The agent functionality 200 (or lambda agent) is started with the legacy (software) application 100. This corresponds to the first step, during which the agent functionality 200 is triggered to be operated together with the legacy software application 100 running on or in the computing or execution environment 150 of the legacy software application 100. Therefore, the start parameters of the legacy (software) application 100 will add some parameters. Once started, all further actions may be added or revoked dynamically - especially by means of modifying program flow configuration data 210. An Example thereof might be (in case of the legacy software application 100 being a Java application): JAR files, that represent code of a Java application, still remains untouched. Bytecode manipulation will take place in main memory only, when the legacy software application 100 is started.

In a second step according to the inventive method, subsequent to the first step and at runtime of the agent functionality 200, the agent functionality 200 intercepts or instruments or triggers the execution of the legacy software application's bytecode 101 with regard to the at least one procedure 105 or procedure call by means of the agent functionality 200 being provided with program flow configuration data 210 such that, dependent on a content of the program flow configuration data 210, the computing or execution environment 150 executes the at least one procedure 105 or procedure call of the legacy software application 100 under the control of the agent functionality 200. As already mentioned, the legacy software application 100 typically comprises a plurality of different procedures and/or methods and/or software modules. Each one of these (or, rather, the corresponding procedure calls or method calls, etc.) or a part thereof could be intercepted or instrumented or triggered by the agent functionality 200. Hence, typically, the agent functionality 200 intercepts of instruments (by means of it being configured by means of the program flow configuration data 210) a plurality of procedures or procedure calls (such as a first procedure or procedure call, a second procedure or procedure call, a third procedure or procedure call, etc.), and the 'at least one procedure 105 or procedure call is only taken as a representative of this plurality of procedures or methods. Of course, subject to the content of the program flow configuration data 210, the agent functionality 200 could also be (e.g. temporarily) configured such that no procedure or procedure call at all is intercepted or instrumented or triggered.

By means of the program flow configuration data 210, the agent functionality 200 (or lambda agent) will receive some configuration data at startup and updates (additions, changes, revokes) regularly. According to an exemplary implementation of the program flow configuration data 210 and the agent functionality 200 (and especially in case that the legacy software application 100 corresponds to a Java application), the configuration data is provided, especially as (one or a plurality of) JSON structures, XML structures or database entries. Both pull and push mechanisms might be implemented. Especially, configuration data will be provided per inbound method call (procedure 105 or procedure call) to be intercepted. At minimum the program flow configuration data 210 include:
-- the unique description of the inbound method;
-- external service to be addressed (instead of or in parallel);
-- interception Yes/No;
-- pattern to apply, if interception happens;
-- more complicated configuration data have to be applied in complex systems (e.g. conditions based on object/JSON contents).

An exemplary embodiment of (a part of) flow configuration data 210 is shown in the following:
"methodName": "addition",
"classPath": "com.tsystems",
"targetURL": "http://Localhost:8080/calculator",
"interceptionlsActivated": true
"methodName": "addition",
"classPath": "appproxyExample.CalculatorService",
"targetURL": "",
"interceptionlsActivated": true,
"callLegacyMethod': "ONLY"
"methodName": "getTax",
"classPath": "approxyExample.control.TaxCaller",
"targetURL": "m2m.tsys.koeln/getTax",
"interceptionlsActivated": true,
"hasNoReturn": false,
"canBeAsync": false,
"callLegacyMethod': "ALWAYS",
"preferredReturn": "REST"
"methodName": "getFamily",
"classPath": "approxyExample.control.FamilyCaller",
"targetURL": "api.tsys.koeln:8280/m2m/0.2ei/getFamily",
"interceptionlsActivated": true,
"callLegacyMethod': "ON_ERROR",
"preferredReturn": "REST"

Hence, the program flow configuration data 210 precisely determine in which manner the agent functionality 200 interacts with the legacy software application 100 (by means of defining how each intercepted or instrumented or triggered procedure 105 or procedure call is handled or processed); however, otherwise the agent functionality 200 is generic or agnostic regarding the legacy software application 100, i.e. the agent functionality 200 interacts with the program flow configuration data 210 such that the agent functionality 200 is able to be configured or parametrized to the legacy software application 100, wherein especially the identical agent functionality 200 code is able to be used - besides with the legacy software application 100 (in connection with the program flow configuration data 210 and executed within the computing or execution environment 150) - with a further legacy software application 100' in connection with a further program flow configuration data 210' and executed within a further computing or execution environment 150'. That's why in Figure 1, the further legacy software application 100' (being implemented or running on or within the further computing or execution environment 150') is schematically shown together with the agent functionality 200 and the further program flow configuration data 210', wherein the further program flow configuration data 210' is configuring or parametrizing the agent functionality 200 to the further legacy software application 100'.

By means of the program flow configuration data 210, the communication (or exchange of information) between the legacy software application 100 and the agent functionality 200 is configured. Reference sign 2 designates the event of an outbound method call (calling method) - i.e. the agent functionality 200 intercepting, from the legacy software application 100, the at least one procedure 105 or procedure call during the execution of the legacy software application's bytecode 101. Reference sign 3 designates the event of an inbound method call (called method) - i.e. the agent functionality 200 triggering or instrumenting the legacy software application 100 such that the at least one procedure 105 or procedure call is executed by the legacy software application's bytecode 101, i.e. internally to the legacy software application 100. Hence, the inbound method call (reference sign 3) corresponds to the actual internal execution of the at least one procedure 105 or procedure call.
Within a typical modernization process of the legacy (software) application 100, this inbound method (call) 3 is the one, that should be replaced by another (e.g. cloud-based) service or another form of external execution, thereby migrating the corresponding functionality from the legacy software application 100 towards the external execution.
After some tests with a replacement service (migrated method or procedure), the corresponding method (or procedure) may become obsolete for the legacy (software) application 100, resulting in this procedure being successfully migrated from an execution within the legacy software application 100 to an execution externally thereof.
In such a modernization scenario, the starting point is typically the legacy software application 100 (which is executed alongside the agent functionality 200 within the computing or execution environment 150, and whose procedure calls are intercepted by the agent functionality 200 in case of an outbound method call (of the calling (and intercepted) method) 2), and an execution (of procedures) internal to the legacy software application 100 is successively migrated towards an execution external to the legacy software application 100, while, e.g., the `surface' or graphical user interface of the legacy software application 100 might still be used - even though, perhaps, many or even most or even all of the legacy software application's procedures are executed externally.
However, the inbound method (call) 3 is also able to be used for another use case or migration scenario: It is also able to be invoked in case that an external (e.g., new) application uses some functionality (i.e., exemplarily, the at least one procedure 105 or procedure call) of the legacy (software) application 100. A corresponding request from such an external application is sent to the agent functionality 200 (or lambda agent), which now is capable to start execution of this legacy (software) application's 100 inbound method (i.e. the corresponding at least one procedure 105 or procedure call).
Thereby, e.g., the new (externally executed) software application (e.g. comprising a new user interface) is able to be realized, requesting to access some (or a plurality or even all) internal data or procedures from the legacy (software) application 100. Hence, according to such a modernization scenario or use case, the starting point is a (new) application external to the legacy software application 100 (which is nevertheless executed or available alongside the agent functionality 200 within the computing or execution environment 150), the new application providing, e.g., a 'surface' or graphical user interface different to the legacy application but nevertheless relying on an execution (of procedures) internal to the legacy software application 100 - even, perhaps, many or even most or even all of the legacy software application's procedures. According to such a modernization scenario, in the first place these internally executed procedures are successively migrated towards an execution within the new application (i.e. external to the legacy software application 100).

With respect to the outbound method call (calling method) 2, there is, in the legacy (software) application 100, a method/function call (procedure 105 or procedure call being intercepted by the agent functionality 200), triggering a request data object 205 to be transmitted (or passed) to the agent functionality 200 (i.e. within the computing or execution environment 150, the agent functionality 200 receives the request data object 205 and the legacy software application 100 provides the request data object 205). The request data object 205 is, of course, related to the at least one procedure 105 or procedure call of the legacy software application 100, i.e. it corresponds to, or defines, the input interface of the at least one procedure 105 or procedure call. After execution of the at least one procedure 105 or procedure call (internally to the legacy software application 100 or externally thereof), a response data object 206 is transmitted (or passed) to the legacy software application 100 (i.e. within the computing or execution environment 150, the legacy software application 100 receives the response data object 206 and the agent functionality 200 provides the response data object 206). The response data object 206 is, of course, related to the at least one procedure 105 or procedure call of the legacy software application 100, i.e. it corresponds to, or defines, the output interface of the at least one procedure 105 or procedure call. Both the request data object 205 and the response data object 206 - as being generated and passed to the respective software entity within the computing or execution environment 150 - correspond, regarding their structure, to data objects of or within the computing or execution environment 150, in principle just like data objects that would have been generated (and passed between different parts or modules of the legacy software application 100) within the computing or execution environment 150 as part of the 'normal' execution of the legacy software application 100 (i.e. without interception by the instrumentation or interception functionality of the computing or execution environment 150, operated, or triggered, by the agent functionality 200). By means of the response data object 206 corresponding to what the control flow of the legacy software application 100 would have expected after execution of the at least one procedure 105 or procedure call, the legacy software application 100 is able to be executed - after the interception by the agent functionality 200 and the execution of the functionality of the at least one procedure 105 or procedure call (i.e. either internally or externally to the legacy software application 100) - as if nothing happened. This selectivity, according to the present invention, in being able to modify the execution (or the behavior) of the legacy software application 100 only at, or regarding, precise points (or procedures) provides the advantage to be able to modify the legacy software application 100 step by step (or: procedure by procedure); moreover- as the interference of the agent functionality 200 regarding the execution (or behavior) of the legacy software application 100 is only defined in the program flow configuration data 210 which itself is changeable at runtime of the legacy software application 100 - this interference (regarding the considered at least one procedure 105 or procedure call) is even able to be completely removed or switched off without any modification of neither the legacy software application 100, nor the agent functionality 200.
Hence, in dependency of the content of the program flow configuration data 210, at runtime of the agent functionality 200, the at least one procedure 105 or procedure call is executed either internally or externally to the legacy software application 100, and, subsequently, the response data object 206 (related to the at least one procedure 105 or procedure call and accepted by the legacy software application 100) is generated (by the agent functionality 200) and provided to the legacy software application 100.

With respect to the inbound method call (calling method) 3, there is, in the legacy (software) application 100, a method/function call (procedure 105 or procedure call being instrumented or triggered by the agent functionality 200), resulting in a further request data object 207 to be transmitted (or passed) to the legacy software application 100 (i.e. within the computing or execution environment 150, the legacy software application 100 receives the further request data object 207 and the agent functionality 200 provides the further request data object 207). The further request data object 207 is, of course, related to the at least one procedure 105 or procedure call of the legacy software application 100, i.e. it corresponds to, or defines, the input interface of the at least one procedure 105 or procedure call. After execution of the at least one procedure 105 or procedure call internally to the legacy software application 100, a further response data object 208 is transmitted (or passed), by the legacy software application 100, to the agent functionality 200 (i.e. within the computing or execution environment 150, the agent functionality 200 receives the further response data object 208 and the legacy software application 100 provides the further response data object 208). The further response data object 208 is, of course, related to the at least one procedure 105 or procedure call of the legacy software application 100, i.e. it corresponds to, or defines, the output interface of the at least one procedure 105 or procedure call. Both the further request data object 207 and the further response data object 208 - as being generated and passed to the respective software entity within the computing or execution environment 150 - correspond, regarding their structure, to data objects of or within the computing or execution environment 150, in principle just like data objects that would have been generated (and passed between different parts or modules of the legacy software application 100) within the computing or execution environment 150 as part of the 'normal' execution of the legacy software application 100 (i.e. without instrumentation or triggering by the instrumentation or interception functionality of the computing or execution environment 150, operated, or triggered, by the agent functionality 200). Again, this selectivity, according to the present invention, in being able to modify the execution (or the behavior) of the legacy software application 100 only at, or regarding, precise points (or procedures) provides the advantage to be able to use (the verified and tested) behavior or functionality of the legacy software application 100 step by step (or: procedure by procedure) as part of the control flow of an external (new) application; moreover - as the interference of the agent functionality 200 regarding the execution (or behavior) of the legacy software application 100 is only defined in the program flow configuration data 210 which itself is changeable at runtime of the legacy software application 100 - this interference (regarding the considered at least one procedure 105 or procedure call) is even able to be completely removed or switched off without any modification of neither the legacy software application 100, nor the agent functionality 200.
Hence, in dependency of the content of the program flow configuration data 210, at runtime of the agent functionality 200, the at least one procedure 105 or procedure call of the legacy software application 100 is able to be used by a (new) external application, and, subsequently, the further response data object 208 (related to the at least one procedure 105 or procedure call) is generated (by the agent functionality 200).

In case of an execution of the at least one procedure 105 or procedure call internally to the legacy software application 100, after the outbound method call (calling method) 2, i.e. after the method/function call (procedure 105 or procedure call) being intercepted by the agent functionality 200, the inbound method call (called method) 3 is triggered by the agent functionality 200. This means that the agent functionality 200 triggers or instruments the legacy software application 100 such that the at least one procedure 105 or procedure call is executed by the legacy software application's bytecode 101, i.e. the agent functionality 200 requests a result from the inbound method call 3: instead of directly calling the legacy software application 100, the call is redirected to the agent functionality 200 (or the agent functionality 200 is aware, based on the request data object 205, that the response data object 206 needs to be generated or filled or complemented with results (or result values)), thus the agent functionality 200 (or the lambda agent) invokes or triggers the inbound method call (called method) 3. If this is the case - as already mentioned with respect to the inbound method call (calling method) 3 - , the legacy software application 100 receives the further request data object 207 (corresponding to the request data object 205) and provides the further response data object 208 to the agent functionality 200, wherein the agent functionality 200 uses the further response data object 208 in order to generate and provide the response data object 206 to the legacy software application 100. Hence, the execution of the at least one procedure 105 or procedure call is realized internally to the legacy software application 100 by means of - after the agent functionality 200 receiving the request data object 205 related to the at least one procedure 105 or procedure call, and providing the further request data object 207, corresponding to the request data object 205, to the legacy software application 100 -:
-- executing, in dependency of the content of the program flow configuration data 210, the at least one procedure 105 or procedure call internally to the legacy software application 100,
-- generating and providing, by the legacy software application 100, the further response data object 208 related to the at least one procedure 105 or procedure call to the agent functionality 200, and
-- generating and providing, by the agent functionality 200 and based on the further response data object 208, the response data object 206 related to the at least one procedure 105 or procedure call and accepted by the legacy software application 100 - to the legacy software application 100.

In case of an execution of the at least one procedure 105 or procedure call externally to the legacy software application 100, after the outbound method call (calling method) 2, i.e. after the method/function call (procedure 105 or procedure call) being intercepted by the agent functionality 200, the inbound method call (called method) 3 does not need to be triggered by the agent functionality 200. In contrast, the functionality of the at least one procedure 105 or procedure call is to be realized or executed externally to the legacy software application 100. According to a preferred embodiment of the present invention, this involves - after the agent functionality 200 receiving the request data object 205 related to the at least one procedure 105 or procedure call - the use of the external computing resources 300, especially a further computing or execution environment or cloud computing resources, such that, based on the request data object 205 related to the at least one procedure 105 or procedure call, a request interface or interface object 307 is generated, by the agent functionality 200, resulting - upon execution of the at least one procedure 105 or procedure call (or upon execution or realization of its functionality) by the external computing resource 300, especially by means of a microservice 310 - in a response interface or interface object 308 received by the agent functionality 200, wherein the response data object 206 related to the at least one procedure 105 or procedure call and accepted by the legacy software application 100 is generated based on the response interface or interface object 308.

Typically, the aim is to replace some functionality within the legacy software application 100 or to add some additional functionality, and therefore a communication path is needed between the legacy environment (especially the computing or execution environment 150) and the external computing resources 300 (exemplarily represented, in Figure 1, by means of a cloud environment 300 or cloud computing resources). According to the present invention, any communication protocol is able to be used; a typical implementation would, e.g., involve a REST-interface or REST-interfaces and/or a gRPC-protocol (or gRPC-interface). Often, the external computing resources 300 are likely to be realized as cloud resources for the deployment of new applications and services (also called target runtime environment). In addition to a public or private cloud, the new runtime environment, i.e. the external computing resources 300 might also be located in dedicated datacenters; however, according to the present invention, all such realizations are possible; it does not make a difference as long as the target services are or the target service is addressable and reachable by the used protocols. Often, services and microservices 310 are built to replace or enhance an existing legacy software application 100. Such services or microservices 310 are able to be written in any type of language, and can be run in any environment, be it local (i.e. outside of the computing or execution environment 150 of the legacy software application 100, or within, or cloud based. The only condition to be fulfilled is the reachability or accessibility by the agent functionality 200 (or lambda agent).

According to the present invention, the behavior of the agent functionality 200 largely depends on and is defined by the program flow configuration data 210. This means that the program flow configuration data 210 need to exist in the sense of having (or comprising) a meaningful content (such as to be able to define or influence the behavior of the agent functionality 200). According to a preferred embodiment of the present invention, in order for the program flow configuration data 210 comprising a meaningful content, a specialized software is used. The specialized software is especially used to assess or to analyze the legacy software application 100 such as to initialize or to initially generate or to modify the program flow configuration data 210. In case of initializing (or initially generating) the program flow configuration data, this needs, necessarily, to be done prior to the second step; however, a modification of the program flow configuration data 210 is able to performed during or even after (initially) performing the second step. Hence:
-- prior to the second step, the program flow configuration data 210 are initiated or initially generated, and/or
-- during or after the second step, the program flow configuration data 210 are modified, wherein in view of the initiation or generation or modification of the program flow configuration data 210 the legacy software application 100 is assessed or analyzed, especially using a specialized software.

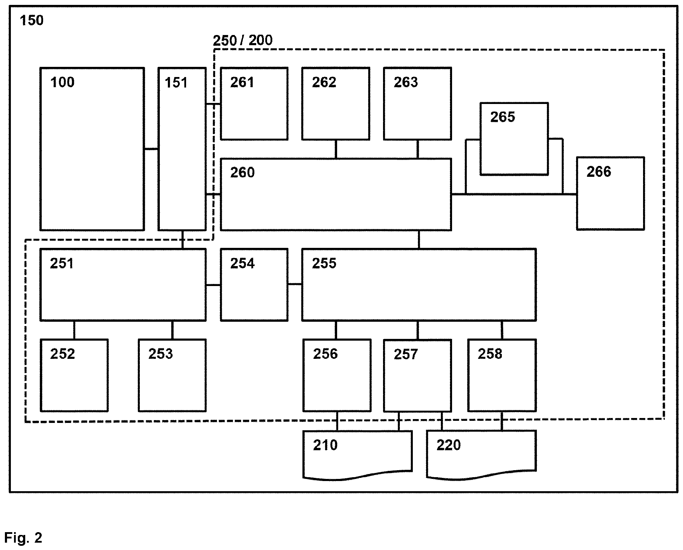

Figure 2 schematically illustrates the computing or execution environment 150 with the legacy software application 100 and the agent functionality 200 or the agent functionality context 250. The agent functionality context 250 comprises the agent functionality 200. The computing or execution environment 150 furthermore comprises the instrumentation services 151 (or interception services 151) of the computing or execution environment 150 - especially in a manner serving as a sort of interface between the legacy software application 100, on the one hand, and the agent functionality 200 and/or the agent functionality context 250, on the other hand. Furthermore, the agent functionality 200 or agent functionality context 250 comprises the following modules or entities or functionalities that are briefly described after being mentioned:
-- a timing interceptor 261: it intercepts method calls and gathers statistical data like duration of the original method call and duration of the new service;
-- a method interceptor 260: it intercepts the original method call and decides what to do with it based on the configuration it gets from the configuration loader;
-- a JSON body builder 262 or bytecode-object-to-interface-object converter 262: it converts a bytecode object into an interface object; especially, it generates a generic JSON-string based on the given method parameters (e.g. Java Objects) of the intercepted method, especially using Java Reflection API; the parsing of the (bytecode) objects is performed without knowledge of the implemented structure of these (bytecode) objects;
-- a JSON to object converter 263 or interface-object-to-bytecode-object converter 263: it receives a result from a service in JSON-Format, and generates a (bytecode) object of the required return type of the original method of the legacy software application 100, especially using Java Reflection API; the type and structure of these (bytecode) objects are initially unknown to the interface-object-to-bytecode-object converter 263 and will be constructed dynamically based on information given by or gathered from the original method and the JSON itself;
-- an external interface client (especially REST and/or gRPC and/or JNI, Java native interface, client) 266: it is a generic client for common (network-)protocols; it is the interface to external applications and services, especially to the external computing resource 300 and/or to the microservice 310; it requests a JSON-String and a target path as input, and returns a JSON-string towards the method interceptor 260;
-- a void REST-call runner 265: it manages asynchronous calls if enabled in the configuration (i.e. in the program flow configuration data 210); it uses the external interface client (especially REST and/or gRPC client and/or JNI) for its asynchronous calls, and can be used when there is no need for the legacy (software) application 100 to wait for an answer;
-- a configuration loader 255: it loads and updates the configuration (especially using the JSON method reader, the XML reader and the file listener or a further database access method);
-- a JSON method reader 256: it reads the configuration-file for the method definition (i.e. the program flow configuration data 210) and converts the data into Java objects using a common JSON-parser;
-- an XML reader 258: it reads the configuration-file for the class mapper and converts the data into Java objects using a common XML-parser;
-- a file listener 257: it checks (in a given time interval or repeatedly according to a predefined repetition rate) whether the configuration-files (i.e. the method definition or the program flow configuration data 210 and the class mapper 220) have been modified; if so, it triggers a reload of the configuration and an update of changed interceptors;
-- a source agent 254: it connects via API to the instrumentation services 151; it contains and manages the interceptors, and adds and/or removes interceptors to/from the instrumentation services 151;
-- a source agent loader 251: it runs on starts up prior to the legacy software application 100 using the Java premain pattern; it triggers the Java version validation, the first configuration loading, the startup of the instrumentation API (or instrumentation services 151) and the creation of all interceptors through the source agent builder before finally the legacy (software) application 100 starts running;
-- a source agent builder 252: it creates all interceptors based on the configuration-data (i.e. the program flow configuration data 210) using the Byte-Buddy library and adds them to the source agent 254;
-- a Java version validator 253: it checks on startup if the installed Java-version and the runtime environment are compatible with the agent functionality 200 (i.e. the lambda agent); it optionally adapts Java or runtime environment requirements, if needed;
-- instrumentation services 151: it corresponds to a low level library for alternating compiled code at runtime, and therefore allowing third-party software such as the agent functionality 200 (or lambda agent) to intercept method calls of a target application (i.e. the targeted legacy software application 100);
-- method definition or program flow configuration data 210: it corresponds to a configuration, especially in JSON-Format, which contains all methods or procedures (i.e. especially the at least one procedure 105 or procedure call) that the agent functionality 200 (or lambda agent) should intercept; it also contains instructions on what to do when a method is intercepted; especially, the following configuration items are mandatory, regarding a method or procedure, within the method definition or program flow configuration data 210:
   -- ClassPath - the class path of the class that contains the method we want to intercept;
   -- MethodName - the name of the method (or procedure, i.e. the at least one procedure 105 or procedure call) that is to be intercepted;
   -- MethodSignature - the signature (parameter types) of the method (or procedure, i.e. the at least one procedure 105 or procedure call) that is to be intercepted;
   -- InterceptionlsActivated - (true/false) switch to activate/deactivate the interception of the method;
   -- TargetURL - where to redirect the method-call;

In addition, there are especially the following optional configuration items:
-- CanBeAsync - (true/false, default: false) to decide if the interception will be synchronous or asynchronous;
-- HasNoReturn - (true/false, default: false) information for the method interceptor 260 to prevent exceptions;
-- CallLegacyMethod - behavior options of the intercepted method, wherein in the following, only examples are provided:
   -- NEVER: (default) never calls the original method (internal execution), only calls the new application (i.e. implemented on the external computing resource 300, especially by means of the microservice 310);
   -- ONLY: never calls the new application (external execution), only calls the original method (internal execution);
   -- ALWAYS: calls both, the original method and the new application and compares the results; by using the configuration option PreferredReturn it can be decided which result to return to the legacy software application 100;
   -- ON_ERROR: tries to call the new application (external execution) and if this causes an exception the original method is called instead (internal execution);
   -- Preferred Return: (REST/gRPC/Method, default: REST) defines which return to use if there are more than one;
-- a class mapper 220: it contains information of the legacy software application 100 about interfaces and abstract classes and their implemented/inherited classes; the JSON to object converter (interface-object-to-bytecode-object converter 263) needs this information to assign the correct classtype to given interfaces/abstract classes; within the class mapper 220, complex logical operations between classes, methods and parameters are allowed.

Hence, according to the present invention, a generic, configuration based enhancement is able to be implemented with regard to any given legacy software application 100 towards a multi path program flow at any (internal) class/method/function call without modifying the source code - of neither the legacy software application 100, nor of the agent functionality 200; only the program flow configuration data 210 is modified. The legacy software application 100 needs to support interception methodologies (e.g. as given for all Java based applications).

According to the present invention, it is especially possible to implement or realize the following workflow:
-- Given is an unknown, complex legacy software application, that will be targeted for the described approach. Such an legacy software application 100 is written in a programming language that supports interception methodology; the application lacks flexibility, maintainability and is not capable to be adapted to new requirements quickly enough; as the application is business critical, the main concern regarding a renewal or migration of the application is related to the risk to interrupt the business workflow by modifying the application and thereby possibly generate errors resulting in shutting down 24/7 operations.
-- According to the present invention, it is advantageously possible to enhance the given legacy software application 100; by means of a simple configuration change (of the program flow configuration data 210) it is possible to switch the executed code (within seconds) back to the legacy application and/or (or, alternatively, run multiple paths and feed back the "best result" into the legacy application again); the present invention is able to be applied to test or productive environments; it is advantageously possible to add and revoke new features to the code (e.g. in a desired cloud environment) regardless of complex release-cycle dependencies of the (legacy) Java application.
-- The legacy application typically has to be analyzed; this can be done in multiple ways (by specialized software and/or "manually" by business domain driven priorities); output of this analysis is a list of class/methods/functions that are relevant for this step of legacy application modification; at any point of time this analysis can be repeated and the results be added to / removed from the list of class / methods / functions. Ideally this process is continually driven, until all functions of the legacy application have been replaced by new services; non destructive code manipulation pattern are able to be applied to the configuration;
   for a first "guess" a specific software is applied and run to analyze the legacy software application 100 (especially a Java application); after, e.g., two days of automated observation, approximately 700 functions (or methods) are found, that could potentially be targeted; in a first step, the business priorities and low hanging fruits are determined; e.g., it is decided to start with five of the given 700 functions first; the five function names are now put into a configuration (e.g. a JSON file); for the five functions, it is selected, whether the agent functionality should switch between new services and old application or alternatively the legacy and new functionalities are run in parallel (e.g. in order to be able to compare results); by just adding keywords to the configuration (i.e. the program flow configuration data 210) it is possible according to the present invention to apply given patterns to the behavior of the combination of the legacy software application 100 and the agent functionality 200; the five microservices developed (and, e.g., based on cloud based technologies) to be able to replace the five individual (and different) procedures 105 or procedure calls are able to be launched externally to the legacy software application 100 - somewhere (i.e. without any restriction where these functionalities are implemented.
-- The configuration is read by the agent functionality 200 (or lambda agent); for all given classes / methods / functions (i.e. in the example for the five procedures or procedure calls), the program flow of the legacy (software) application is intercepted; instead of executing the called method, the program flow is redirected to the agent functionality 200 (or lambda agent); typically, the configuration (i.e. the program flow configuration data 210) again allows multiple options to act; examples include:
   -- Execute old code (i.e. internally in the legacy software application 100);
   -- Execute new service (i.e. externally to the legacy software application 100);
   -- Switch by defined percentage between old and new;
   -- Throw an Event;
   -- Store extracted data;
   -- Run old and new code in parallel and compare results;
   -- Analyze timings of old and new;

(According to the present invention, many more pattern are able to be applied by the agent functionality 200 or the lambda agent.

In case corresponding results and tests (of the, exemplarily five procedures or procedure calls, or a part thereof) are encouraging, the corresponding functionality might be immediately migrated from the legacy software application 100 in an operational manner - however with careful monitoring applied; if, at any point in time, an error or failure of the new services occurs, it is possible to change the configuration file (especially a JSON file), i.e. the program flow configuration data 210, and in a matter of minutes, the decision is reverted and the old legacy code (of these functionalities) of the legacy software application 100 runs - without shutting down any system or operations; thereafter, the code (of the new services) might be fixed and be given a further try; alternatively to completely migrating a functionality to the new services, a different pattern might be applied: both old and new functionalities might be run in parallel; for each method call, the agent functionality 200 (lambda agent) shoots for two results, and both results get returned and compared; if there are differences, these can be compared (automated or manually) before finally switching to the new services or functionalities; such switching over such services corresponds to just a single line entry within the program flow configuration data 210 (JSON config file).

## Claims

1. Method for operating a legacy software application (100), executed by running bytecode within a computing or execution environment (150), by means of using the legacy software application (100) together with an interception-based or instrumentation-based agent functionality (200), running on or in the computing or execution environment (150) of the legacy software application (100) and being realized as a generic and configurable agent functionality (200), especially being agnostic to the legacy software application (100), wherein the agent functionality (200) is able to intercept or instrument the execution of the legacy software application's bytecode (101), wherein by means of intercepting or instrumenting the legacy software application's bytecode (101) the agent functionality (200) is able to interact, dynamically and/or at runtime of the bytecode (101), with at least one procedure (105) or procedure call as part of the legacy software application (100), wherein the method comprises the following steps:
-- in a first step, the agent functionality (200) is triggered to be operated together with the legacy software application (100) running on or in the computing or execution environment (150) of the legacy software application (100),
-- in a second step, subsequent to the first step and at runtime of the agent functionality (200), the agent functionality (200) intercepts or instruments or triggers the execution of the legacy software application's bytecode (101) with regard to the at least one procedure (105) or procedure call by means of the agent functionality (200) being provided with program flow configuration data (210) such that, dependent on a content of the program flow configuration data (210), the computing or execution environment (150) executes the at least one procedure (105) or procedure call of the legacy software application (100) under the control of the agent functionality (200), wherein the agent functionality (200) receives, from the legacy software application (100) and upon intercepting the at least one procedure (105) or procedure call during the execution of the legacy software application's bytecode (101), a request data object (205) - related to the at least one procedure (105) or procedure call of the legacy software application (100) -, wherein in dependency of the content, at runtime of the agent functionality (200), of the program flow configuration data (210), the at least one procedure (105) or procedure call is executed externally to the legacy software application (100), wherein a response data object (206) - related to the at least one procedure (105) or procedure call and accepted by the legacy software application (100) - is generated and provided to the legacy software application (100).

2. Method according to claim 1, wherein the agent functionality (200) - being agnostic to the legacy software application (100) - interacts with the program flow configuration data (210) such that the agent functionality (200) is able to be configured to the legacy software application (100), wherein especially an identical agent functionality (200) code is able to be used - besides with the legacy software application (100) in connection with the program flow configuration data (210) and executed within the computing or execution environment (150) - with a further legacy software application (100') in connection with a further program flow configuration data (210') and executed within a further computing or execution environment (150').

3. Method according to one of the preceding claims, wherein in the second step, the agent functionality (200) generates and provides, to the legacy software application (100), a further request data object (207) - related to the at least one procedure (105) or procedure call of the legacy software application (100) -,
wherein in dependency of the content, at runtime of the agent functionality (200), of the program flow configuration data (210), the at least one procedure (105) or procedure call is executed internally to the legacy software application (100), and
wherein the agent functionality (200) receives, from the legacy software application (100), a further response data object (208) - related to the at least one procedure (105) or procedure call.

4. Method according to one of the preceding claims, wherein the legacy software application (100) supports interception services or instrumentation services, wherein especially the interception-based or instrumentation-based agent functionality (200) is based on Java instrumentation services, especially the ByteBuddy Library, and is operated, together with the legacy software application (100), according to a sidecar pattern,
wherein especially the behavior of the agent functionality (200) is able to be modified - at runtime - by means of a modification of the program flow configuration data (210).

5. Method according to one of the preceding claims, wherein
-- prior to the second step, the program flow configuration data (210) are initiated or initially generated, and/or
-- during or after the second step, the program flow configuration data (210) are modified,
wherein in view of the initiation or generation or modification of the program flow configuration data (210) the legacy software application (100) is assessed or analyzed, especially using a specialized software.

6. Method according to one of the preceding claims, wherein an execution of the at least one procedure (105) or procedure call that is realized internally to the legacy software application (100) involves - after the agent functionality (200) receiving the request data object (205) related to the at least one procedure (105) or procedure call, and providing the further request data object (207), corresponding to the request data object (205), to the legacy software application (100) -
-- executing, in dependency of the content of the program flow configuration data (210), the at least one procedure (105) or procedure call internally to the legacy software application (100),
-- generating and providing, by the legacy software application (100), the further response data object (208) related to the at least one procedure (105) or procedure call to the agent functionality (200), and
-- generating and providing, by the agent functionality (200) and based on the further response data object (208), the response data object (206) related to the at least one procedure (105) or procedure call and accepted by the legacy software application (100) - to the legacy software application (100).

7. Method according to one of the preceding claims, wherein an execution of the at least one procedure (105) or procedure call that is realized externally to the legacy software application (100) involves - after the agent functionality (200) receiving the request data object (205) related to the at least one procedure (105) or procedure call - the use of external computing resources (300), especially a further computing or execution environment or cloud computing resources, such that, based on the request data object (205) related to the at least one procedure (105) or procedure call, a request interface or interface object (307) is generated, by the agent functionality (200), resulting - upon execution of the at least one procedure (105) or procedure call by the external computing resource (300), especially by means of a microservice (310), - in a response interface or interface object (308) received by the agent functionality (200), wherein the response data object (206) related to the at least one procedure (105) or procedure call and accepted by the legacy software application (100) is generated based on the response interface or interface object (308).

8. Method according to one of the preceding claims, wherein the agent functionality (200) comprises a bytecode-object-to-interface-object converter (262) and/or an interface-object-to-bytecode-object converter (263), wherein the interface-object-to-bytecode-object converter (262) generates the request interface or interface object (307), or at least a part thereof, based on the request data object (205), and wherein the interface-object-to-bytecode-object converter (263) generates the response data object (206), or at least a part thereof, based on the response interface or interface object (308), wherein the functionality of the bytecode-object-to-interface-object converter (262) and/or of the interface-object-to-bytecode-object converter (263) is realized in a manner being agnostic to the legacy software application (100).

9. Method according to one of the preceding claims, wherein the request interface or interface object (307) and/or the response interface or interface object (308) corresponds to or implements a transmission protocol or a transmission protocol application programming interface, especially one or a plurality out of the following:
-- an application programming interface according to the REST, Representational State Transfer, application programming interface standard, especially involving a json structure,
-- an application programming interface according to the gRPC, google Remote Procedure Call, standard.

10. Method according to one of the preceding claims, wherein instead of or in addition to the execution of the at least one procedure (105) or procedure call externally to the legacy software application (100), the agent functionality (200) and/or the computing or execution environment (150) and/or the microservice (310) realizes a logging functionality and/or monitoring functionality and/or result comparison functionality and/or key performance indicator measuring functionality related to the at least one procedure (105) or procedure call of the legacy software application (100),
wherein especially the response data object (206) - related to the at least one procedure (105) or procedure call and accepted by the legacy software application (100), and being generated based on the response interface or interface object (308) - is generated prior to the actual execution of the at least one procedure (105) or procedure call by means of the computing or execution environment (150) or the microservice (310).

11. Method according to one of the preceding claims, wherein an execution of the at least one procedure (105) or procedure call internally and/or externally to the legacy software application (100) and/or the logging functionality and/or the monitoring functionality and/or the result comparison functionality and/or the key performance indicator measuring functionality related to the at least one procedure (105) or procedure call is modifiable, at runtime of the agent functionality (200), by means of modifying the program flow configuration data (210) only, and especially not by modifying the legacy software application (100) nor the agent functionality (200).

12. System (150) for operating a legacy software application (100), executed by running bytecode within the computing or execution environment (150), by means of using the legacy software application (100) together with an interception-based or instrumentation-based agent functionality (200), running on or in the computing or execution environment (150) of the legacy software application (100) and being realized as a generic and configurable agent functionality (200), especially being agnostic to the legacy software application (100), the agent functionality (200) being able to intercept or instrument the execution of the legacy software application's bytecode (101), wherein by means of intercepting or instrumenting the legacy software application's bytecode (101) the agent functionality (200) is able to interact, dynamically and/or at runtime of the bytecode (101), with at least one procedure (105) or procedure call as part of the legacy software application (100), the system or computing or execution environment (150) being configured such that:
-- the agent functionality (200) is triggered to be operated together with the legacy software application (100) running on or in the computing or execution environment (150) of the legacy software application (100),
-- at runtime of the agent functionality (200), the agent functionality (200) intercepts or instruments or triggers the execution of the legacy software application's bytecode (101) with regard to the at least one procedure (105) or procedure call by means of the agent functionality (200) being provided with program flow configuration data (210) such that, dependent on a content of the program flow configuration data (210), the computing or execution environment (150) executes the at least one procedure (105) or procedure call of the legacy software application (100) under the control of the agent functionality (200), wherein the agent functionality (200) receives, from the legacy software application (100) and upon intercepting the at least one procedure (105) or procedure call during the execution of the legacy software application's bytecode (101), a request data object (205) - related to the at least one procedure (105) or procedure call of the legacy software application (100) -, wherein in dependency of the content, at runtime of the agent functionality (200), of the program flow configuration data (210), the at least one procedure (105) or procedure call is executed, either internally or externally to the legacy software application (100), and wherein a response data object (206) - related to the at least one procedure (105) or procedure call and accepted by the legacy software application (100) - is generated and provided to the legacy software application (100).

13. System (150) according to claim 12 wherein the agent functionality (200) generates and provides, to the legacy software application (100), a further request data object (207) - related to the at least one procedure (105) or procedure call of the legacy software application (100) -, wherein in dependency of the content, at runtime of the agent functionality (200), of the program flow configuration data (210), the at least one procedure (105) or procedure call is executed internally to the legacy software application (100), and wherein the agent functionality (200) receives, from the legacy software application (100), a further response data object (208) - related to the at least one procedure (105) or procedure call.

14. Program comprising an agent functionality (200) for being operated or running together with a legacy software application (100) within a computing or execution environment (150) by means of executing bytecode, the agent functionality (200) being interception-based or instrumentation-based and being realized as a generic and configurable agent functionality (200), especially being agnostic to the legacy software application (100),
wherein the agent functionality (200) is able to intercept or instrument the execution of the legacy software application's bytecode (101), wherein by means of intercepting or instrumenting the legacy software application's bytecode (101) the agent functionality (200) is able to interact, dynamically and/or at runtime of the bytecode (101), with at least one procedure (105) or procedure call as part of the legacy software application (100), the agent functionality (200) being configured such that:
-- the agent functionality (200) is triggered to be operated together with the legacy software application (100) running on or in the computing or execution environment (150) of the legacy software application (100),
-- at runtime of the agent functionality (200), the agent functionality (200) intercepts or instruments or triggers the execution of the legacy software application's bytecode (101) with regard to the at least one procedure (105) or procedure call by means of the agent functionality (200) being provided with program flow configuration data (210) such that, dependent on a content of the program flow configuration data (210), the computing or execution environment (150) executes the at least one procedure (105) or procedure call of the legacy software application (100) under the control of the agent functionality (200), wherein the agent functionality (200) receives, from the legacy software application (100) and upon intercepting the at least one procedure (105) or procedure call during the execution of the legacy software application's bytecode (101), a request data object (205) - related to the at least one procedure (105) or procedure call of the legacy software application (100) -, wherein in dependency of the content, at runtime of the agent functionality (200), of the program flow configuration data (210), the at least one procedure (105) or procedure call is executed, either internally or externally to the legacy software application (100), and wherein a response data object (206) - related to the at least one procedure (105) or procedure call and accepted by the legacy software application (100) - is generated and provided to the legacy software application (100).

15. Computer-readable medium comprising instructions, which, when executed on a computer and/or on a computing or execution environment (150) and/or on cloud computing resources (300) and/or as part of a microservice (310), or in part on a computing or execution environment (150) and/or in part on cloud computing resources (300) and/or in part as part of a microservice (310), causes the computer and/or the computing or execution environment (150) and/or the cloud computing resources (300) and/or the microservice (310) to perform a method according one of claims 1 to 11.

## Patentansprüche

1. Verfahren zum Betreiben einer älteren Software-Anwendung (100), die durch Ausführen von Bytecode innerhalb einer Computing- oder Ausführungsumgebung (150) ausgeführt wird, mittels Verwendung der älteren Software-Anwendung (100) zusammen mit einer interzeptionsbasierten oder instrumentierungsbasierten Agentenfunktionalität (200), die auf oder in der Computing- oder Ausführungsumgebung (150) der älteren Software-Anwendung (100) läuft und als eine generische und konfigurierbare Agentenfunktionalität (200) realisiert ist, die insbesondere der älteren Software-Anwendung (100) unbekannt ist, wobei die Agentenfunktionalität (200) in der Lage ist, die Ausführung des Bytecodes (101) der älteren Software-Anwendung zu interzeptieren oder zu instrumentieren, wobei die Agentenfunktionalität (200) mittels des Interzeptierens oder Instrumentierens des Bytecodes (101) der älteren Software-Anwendung in der Lage ist, dynamisch und/oder zur Laufzeit des Bytecodes (101) mit mindestens einer Prozedur (105) oder mindestens einem Prozeduraufruf als Teil der älteren Software-Anwendung (100) zu interagieren, wobei das Verfahren die folgenden Schritte umfasst:
- in einem ersten Schritt wird die Agentenfunktionalität (200) ausgelöst, um zusammen mit der älteren Softwareanwendung (100), die auf oder in der Computing- oder Ausführungsumgebung (150) der älteren Softwareanwendung (100) läuft, betrieben zu werden,
- in einem zweiten Schritt, im Anschluss an den ersten Schritt und zur Laufzeit der Agentenfunktionalität (200), interzeptiert oder instrumentiert oder veranlasst die Agentenfunktionalität (200) die Ausführung des Bytecodes (101) der älteren Software-Anwendung mit Bezug auf die mindestens eine Prozedur (105) oder den mindestens einen Prozeduraufruf, indem die Agentenfunktionalität (200) mit Programmflusskonfigurationsdaten (210) versorgt wird, so dass, in Abhängigkeit von einem Inhalt der Programmflusskonfigurationsdaten (210), die Computing- oder Ausführungsumgebung (150) die mindestens eine Prozedur (105) oder den mindestens einen Prozeduraufruf der älteren Software-Anwendung (100) unter der Steuerung der Agentenfunktionalität (200) ausführt, wobei die Agentenfunktionalität (200), von der älteren Software-Anwendung (100) und bei Interzeptieren der mindestens eine Prozedur (105) oder des mindestens einen Prozeduraufrufs während der Ausführung des Bytecodes (101) der älteren Software-Anwendung, ein Anforderungsdatenobjekt (205) - das sich auf die mindestens eine Prozedur (105) oder den mindestens einen Prozeduraufruf der älteren Software-Anwendung (100) bezieht - empfängt, wobei in Abhängigkeit von dem Inhalt, zur Laufzeit der Agentenfunktionalität (200), der Programmflusskonfigurationsdaten (210) die mindestens eine Prozedur (105) oder der mindestens eine Prozeduraufruf außerhalb der älteren Software-Anwendung (100) ausgeführt wird, wobei ein Antwortdatenobjekt (206) - das sich auf die mindestens eine Prozedur (105) oder den mindestens einen Prozeduraufruf bezieht und durch die ältere Software-Anwendung (100) akzeptiert wird - generiert und an die ältere Software-Anwendung (100) übermittelt wird.

2. Verfahren nach Anspruch 1, wobei die Agentenfunktionalität (200) - die der älteren Software-Anwendung (100) unbekannt ist - mit den Programmflusskonfigurationsdaten (210) dergestalt interagiert, dass die Agentenfunktionalität (200) auf die ältere Software-Anwendung (100) konfigurierbar ist, wobei insbesondere ein identischer Code der Agentenfunktionalität (200) - neben der älteren Software-Anwendung (100) in Verbindung mit den Programmflusskonfigurationsdaten (210) und innerhalb der Computing- oder Ausführungsumgebung (150) ausgeführt - mit einer weiteren älteren Software-Anwendung (100') - in Verbindung mit weiteren Programmflusskonfigurationsdaten (210') und innerhalb einer weiteren Computing- oder Ausführungsumgebung (150') ausgeführt - verwendet werden kann.

3. Verfahren nach einem der vorangehenden Ansprüche, wobei in dem zweiten Schritt die Agentenfunktionalität (200) ein weiteres Anforderungsdatenobjekt (207) - das sich auf die mindestens eine Prozedur (105) oder den mindestens einen Prozeduraufruf der älteren Software-Anwendung (100) bezieht - generiert und an die ältere Software-Anwendung (100) übermittelt,
wobei in Abhängigkeit von dem Inhalt, zur Laufzeit der Agentenfunktionalität (200), der Programmflusskonfigurationsdaten (210) die mindestens eine Prozedur (105) oder der mindestens eine Prozeduraufruf innerhalb der älteren Softwareanwendung (100) ausgeführt wird, und
wobei die Agentenfunktionalität (200), von der älteren Softwareanwendung (100), ein weiteres Antwortdatenobjekt (208) - das sich auf die mindestens eine Prozedur (105) oder den mindestens einen Prozeduraufruf bezieht - empfängt.

4. Verfahren nach einem der vorangehenden Ansprüche, wobei die ältere Software-Anwendung (100) Interzeptionsdienste oder Instrumentierungsdienste unterstützt, wobei insbesondere die interzeptionsbasierte oder instrumentierungsbasierte Agentenfunktionalität (200) auf Java-Instrumentierungsdiensten, insbesondere der ByteBuddy Library, basiert und zusammen mit der älteren Software-Anwendung (100) gemäß einem Sidecar-Pattern betrieben wird, wobei insbesondere das Verhalten der Agentenfunktionalität (200) - zur Laufzeit - durch eine Modifikation der Programmflusskonfigurationsdaten (210) modifiziert werden kann.

5. Verfahren nach einem der vorangehenden Ansprüche, wobei
- vor dem zweiten Schritt die Programmflusskonfigurationsdaten (210) initiiert oder anfänglich generiert werden, und/oder
- während oder nach dem zweiten Schritt die Programmflusskonfigurationsdaten (210) modifiziert werden,
wobei die ältere Software-Anwendung (100) - insbesondere unter Verwendung einer spezialisierten Software - im Hinblick auf die Initiierung oder Generierung oder Modifizierung der Programmflusskonfigurationsdaten (210) beurteilt oder analysiert wird.

6. Verfahren nach einem der vorangehenden Ansprüche, wobei eine Ausführung der mindestens einen Prozedur (105) oder des mindestens einen Prozeduraufrufs, die innerhalb der älteren Software-Anwendung (100) realisiert wird, nachdem die Agentenfunktionalität (200) das Anforderungsdatenobjekt (205), das sich auf die mindestens eine Prozedur (105) oder den mindestens einen Prozeduraufruf bezieht, empfangen hat und das weitere Anforderungsdatenobjekt (207), das dem Anforderungsdatenobjekt (205) entspricht, an die ältere Software-Anwendung (100) übermittelt wird, umfasst:
- Ausführen, in Abhängigkeit von dem Inhalt der Programmflusskonfigurationsdaten (210), der mindestens einen Prozedur (105) oder des mindestens einen Prozeduraufrufs innerhalb der älteren Software-Anwendung (100),
- Generieren und Übermitteln, durch die ältere Softwareanwendung (100), des weiteren Antwortdatenobjekts (208), das sich auf die mindestens eine Prozedur (105) oder den mindestens einen Prozeduraufruf an die Agentenfunktionalität (200) bezieht, und
- Generieren und Übermitteln, durch die Agentenfunktionalität (200) und auf der Grundlage des weiteren Antwortdatenobjekts (208), des Antwortdatenobjekts (206), das sich auf die mindestens eine Prozedur (105) oder den mindestens einen Prozeduraufruf bezieht und durch die ältere Software-Anwendung (100) akzeptiert wird - an die ältere Software-Anwendung (100).

7. Verfahren nach einem der vorangehenden Ansprüche, wobei eine Ausführung der mindestens einen Prozedur (105) oder des mindestens einen Prozeduraufrufs, der bzw. die außerhalb der älteren Softwareanwendung (100) realisiert wird, nachdem die Agentenfunktionalität (200) das Anforderungsdatenobjekts (205), das sich auf die mindestens eine Prozedur (105) oder den mindestens einen Prozeduraufruf bezieht, empfangen hat, die Verwendung externer Computing-Ressourcen (300), insbesondere einer weiteren Computing- oder Ausführungsumgebung oder von Cloud-Computing-Ressourcen, umfasst, dergestalt, dass auf der Grundlage des Anforderungsdatenobjekts (205), das sich auf die mindestens eine Prozedur (105) oder den mindestens einen Prozeduraufruf bezieht, eine Anforderungsschnittstelle oder ein Anforderungsschnittstellenobjekt (307) durch die Agentenfunktionalität (200) generiert wird, was - bei Ausführung der mindestens einen Prozedur (105) oder des mindestens einen Prozeduraufrufs durch die externe Computing-Ressource (300), insbesondere mittels eines Mikrodienstes (310) - zu einer Antwortschnittstelle oder einem Antwortschnittstellenobjekt (308) führt, die bzw. das durch die Agentenfunktionalität (200) empfangen wird, wobei das Antwortdatenobjekt (206), das sich auf die mindestens eine Prozedur (105) oder den mindestens einen Prozeduraufruf bezieht und durch die ältere Softwareanwendung (100) akzeptiert wird, auf der Grundlage der Antwortschnittstelle oder des Antwortschnittstellenobjekts (308) generiert wird.

8. Verfahren nach einem der vorangehenden Ansprüche, wobei die Agentenfunktionalität (200) einen Bytecode-Objekt-zu-Schnittstellen-Objekt-Konverter (262) und/oder einen Schnittstellen-Objekt-zu-Bytecode-Objekt-Konverter (263) umfasst, wobei der Schnittstellen-Objekt-zu-Bytecode-Objekt-Konverter (262) die Anforderungsschnittstelle oder das Anforderungsschnittstellenobjekt (307), oder mindestens einen Teil davon, auf der Grundlage des Anforderungsdatenobjekt (205) generiert, und wobei der Schnittstellen-Objekt-zu-Bytecode-Objekt-Konverter (263) das Antwortdatenobjekt (206), oder mindestens einen Teil davon, auf der Grundlage der Antwortschnittstelle oder des Antwortschnittstellenobjekts (308) generiert, wobei die Funktionalität des Bytecode-Objekt-zu-Schnittstellen-Objekt-Konverters (262) und/oder des Schnittstellen-Objekt-zu-Bytecode-Objekt-Konverters (263) in einer Weise realisiert wird, die der älteren Software-Anwendung (100) unbekannt ist.

9. Verfahren nach einem der vorangehenden Ansprüche, wobei die Anforderungsschnittstelle oder das Anforderungsschnittstellenobjekt (307) und/oder die Antwortschnittstelle oder das Antwortschnittstellenobjekt (308) einem Übertragungsprotokoll oder einer Übertragungsprotokoll-Anwendungsprogrammierschnittstelle entsprechen oder ein Übertragungsprotokoll oder eine Übertragungsprotokoll-Anwendungsprogrammierschnittstelle implementieren, insbesondere eines oder mehreren von Folgendem:
- eine Anwendungsprogrammierschnittstelle gemäß dem REST (Representational State Transfer)-Anwendungsprogrammierschnittstellenstandard, insbesondere unter Verwendung einer json-Struktur,
- eine Anwendungsprogrammierschnittstelle gemäß dem gRPC (google Remote Procedure Call)-Standard.

10. Verfahren nach einem der vorangehenden Ansprüche, wobei anstelle oder zusätzlich zu der Ausführung der mindestens einen Prozedur (105) oder des mindestens einen Prozeduraufrufs außerhalb der älteren Software-Anwendung (100) die Agentenfunktionalität (200) und/oder die Computing- oder Ausführungsumgebung (150) und/oder der Mikrodienst (310) eine Protokollierungsfunktionalität und/oder eine Überwachungsfunktionalität und/oder eine Ergebnisvergleichsfunktionalität und/oder eine Key-Performance-Indicator-Messungsfunktionalität, die sich auf die mindestens eine Prozedur (105) oder den mindestens einen Prozeduraufruf der älteren Software-Anwendung (100) beziehen, realisiert,
wobei insbesondere das Antwortdatenobjekt (206) - das sich auf die mindestens eine Prozedur (105) oder den mindestens einen Prozeduraufruf bezieht und durch die ältere Software-Anwendung (100) akzeptiert wird und auf der Grundlage der Antwortschnittstelle oder des Antwortschnittstellenobjekts (308) generiert wird - vor der tatsächlichen Ausführung der mindestens einen Prozedur (105) oder des mindestens einen Prozeduraufrufs mittels der Computing- oder Ausführungsumgebung (150) oder des Mikrodienstes (310) generiert wird.

11. Verfahren nach einem der vorangehenden Ansprüche, wobei eine Ausführung der mindestens einen Prozedur (105) oder des mindestens einen Prozeduraufrufs innerhalb und/oder außerhalb der älteren Software-Anwendung (100) und/oder der Protokollierungsfunktionalität und/oder der Überwachungsfunktionalität und/oder der Ergebnisvergleichsfunktionalität und/oder der Key-Performance-Indicator-Messfunktionalität, die sich auf die mindestens eine Prozedur (105) oder den mindestens einen Prozeduraufruf der älteren Software-Anwendung (100) beziehen, zur Laufzeit der Agentenfunktionalität (200) allein durch Modifizieren der Programmflusskonfigurationsdaten (210) und insbesondere nicht durch Modifizieren der älteren Software-Anwendung (100) oder der Agentenfunktionalität (200) modifizierbar ist.

12. System (150) zum Betreiben einer älteren Software-Anwendung (100), die durch Ausführen von Bytecode innerhalb der Computing- oder Ausführungsumgebung (150) ausgeführt wird, mittels Verwendung der älteren Software-Anwendung (100) zusammen mit einer interzeptionsbasierten oder instrumentierungsbasierten Agentenfunktionalität (200), die auf oder in der Computing- oder Ausführungsumgebung (150) der älteren Software-Anwendung (100) läuft und als eine generische und konfigurierbare Agentenfunktionalität (200) realisiert ist, die insbesondere der älteren Software-Anwendung (100) unbekannt ist, wobei die Agentenfunktionalität (200) in der Lage ist, die Ausführung des Bytecodes (101) der älteren Software-Anwendung zu interzeptieren oder zu instrumentieren, wobei die Agentenfunktionalität (200) mittels des Interzeptierens oder Instrumentierens des Bytecodes (101) der älteren Software-Anwendung in der Lage ist, dynamisch und/oder zur Laufzeit des Bytecodes (101) mit mindestens einer Prozedur (105) oder mindestens einem Prozeduraufruf als Teil der älteren Software-Anwendung (100) zu interagieren, wobei das System oder die Computing- oder Ausführungsumgebung (150) so konfiguriert ist, dass:
- die Agentenfunktionalität (200) ausgelöst wird, um zusammen mit der älteren Softwareanwendung (100), die auf oder in der Computing- oder Ausführungsumgebung (150) der älteren Softwareanwendung (100) läuft, betrieben zu werden,
- die Agentenfunktionalität (200) - zur Laufzeit der Agentenfunktionalität (200) - die Ausführung des Bytecodes (101) der älteren Software-Anwendung mit Bezug auf die mindestens eine Prozedur (105) oder den mindestens einen Prozeduraufruf interzeptiert oder instrumentiert oder veranlasst, indem die Agentenfunktionalität (200) mit Programmflusskonfigurationsdaten (210) versorgt wird, so dass, in Abhängigkeit von einem Inhalt der Programmflusskonfigurationsdaten (210), die Computing- oder Ausführungsumgebung (150) die mindestens eine Prozedur (105) oder den mindestens einen Prozeduraufruf der älteren Software-Anwendung (100) unter der Steuerung der Agentenfunktionalität (200) ausführt, wobei die Agentenfunktionalität (200), von der älteren Software-Anwendung (100) und bei Interzeptieren der mindestens eine Prozedur (105) oder des mindestens einen Prozeduraufrufs während der Ausführung des Bytecodes (101) der älteren Software-Anwendung, ein Anforderungsdatenobjekt (205) - das sich auf die mindestens eine Prozedur (105) oder den mindestens einen Prozeduraufruf der älteren Software-Anwendung (100) bezieht - empfängt, wobei in Abhängigkeit von dem Inhalt, zur Laufzeit der Agentenfunktionalität (200), der Programmflusskonfigurationsdaten (210) die mindestens eine Prozedur (105) oder der mindestens eine Prozeduraufruf entweder innerhalb oder außerhalb der älteren Software-Anwendung (100) ausgeführt wird, wobei ein Antwortdatenobjekt (206) - das sich auf die mindestens eine Prozedur (105) oder den mindestens einen Prozeduraufruf bezieht und durch die ältere Software-Anwendung (100) akzeptiert wird - generiert und an die ältere Software-Anwendung (100) übermittelt wird.

13. System nach Anspruch 12, wobei die Agentenfunktionalität (200) ein weiteres Anforderungsdatenobjekt (207) - das sich auf die mindestens eine Prozedur (105) oder den mindestens einen Prozeduraufruf der älteren Software-Anwendung (100) bezieht - generiert und an die ältere Software-Anwendung (100) übermittelt, wobei in Abhängigkeit von dem Inhalt, zur Laufzeit der Agentenfunktionalität (200), der Programmflusskonfigurationsdaten (210) die mindestens eine Prozedur (105) oder der mindestens eine Prozeduraufruf innerhalb der älteren Software-Anwendung (100) ausgeführt wird, und wobei die Agentenfunktionalität (200), von der älteren Software-Anwendung (100), ein weiteres Antwortdatenobjekt (208) - das sich auf die mindestens eine Prozedur (105) oder den mindestens einen Prozeduraufruf bezieht - empfängt.

14. Programm, umfassend eine Agentenfunktionalität (200), um zusammen mit einer älteren Software-Anwendung (100) innerhalb einer Computing- oder Ausführungsumgebung (150) mittels des Ausführens von Bytecode betrieben zu werden oder zu laufen, wobei die Agentenfunktionalität (200) interzeptionsbasiert oder instrumentierungsbasiert ist und als eine generische und konfigurierbare Agentenfunktionalität (200) realisiert ist, die insbesondere der älteren Software-Anwendung (100) unbekannt ist, wobei die Agentenfunktionalität (200) in der Lage ist, die Ausführung des Bytecodes (101) der älteren Software-Anwendung zu interzeptieren oder zu instrumentieren, wobei die Agentenfunktionalität (200) mittels des Interzeptierens oder Instrumentierens des Bytecodes (101) der älteren Software-Anwendung in der Lage ist, dynamisch und/oder zur Laufzeit des Bytecodes (101) mit mindestens einer Prozedur (105) oder mindestens einem Prozeduraufruf als Teil der älteren Software-Anwendung (100) zu interagieren, wobei die Agentenfunktionalität (200) so konfiguriert ist, dass:
- die Agentenfunktionalität (200) ausgelöst wird, um zusammen mit der älteren Softwareanwendung (100), die auf oder in der Computing- oder Ausführungsumgebung (150) der älteren Softwareanwendung (100) läuft, betrieben zu werden,
- die Agentenfunktionalität (200) - zur Laufzeit der Agentenfunktionalität (200) - die Ausführung des Bytecodes (101) der älteren Software-Anwendung mit Bezug auf die mindestens eine Prozedur (105) oder den mindestens einen Prozeduraufruf interzeptiert oder instrumentiert oder veranlasst, indem die Agentenfunktionalität (200) mit Programmflusskonfigurationsdaten (210) versorgt wird, so dass, in Abhängigkeit von einem Inhalt der Programmflusskonfigurationsdaten (210), die Computing- oder Ausführungsumgebung (150) die mindestens eine Prozedur (105) oder den mindestens einen Prozeduraufruf der älteren Software-Anwendung (100) unter der Steuerung der Agentenfunktionalität (200) ausführt, wobei die Agentenfunktionalität (200), von der älteren Software-Anwendung (100) und bei Interzeptieren der mindestens eine Prozedur (105) oder des mindestens einen Prozeduraufrufs während der Ausführung des Bytecodes (101) der älteren Software-Anwendung, ein Anforderungsdatenobjekt (205) - das sich auf die mindestens eine Prozedur (105) oder den mindestens einen Prozeduraufruf der älteren Software-Anwendung (100) bezieht - empfängt, wobei in Abhängigkeit von dem Inhalt, zur Laufzeit der Agentenfunktionalität (200), der Programmflusskonfigurationsdaten (210) die mindestens eine Prozedur (105) oder der mindestens eine Prozeduraufruf entweder innerhalb oder außerhalb der älteren Software-Anwendung (100) ausgeführt wird, wobei ein Antwortdatenobjekt (206) - das sich auf die mindestens eine Prozedur (105) oder den mindestens einen Prozeduraufruf bezieht und durch die ältere Software-Anwendung (100) akzeptiert wird - generiert und an die ältere Software-Anwendung (100) übermittelt wird.

15. Computerlesbares Medium, umfassend Instruktionen, die, wenn sie auf einem Computer und/oder in einer Computing- oder Ausführungsumgebung (150) und/oder in Cloud-Computing-Ressourcen (300) und/oder als Teil eines Mikrodienstes (310) oder teilweise in einer Computing- oder Ausführungsumgebung (150) und/oder teilweise in Cloud-Computing-Ressourcen (300) und/oder teilweise als Teil eines Mikrodienstes (310) ausgeführt werden, den Computer und/oder die Computing- oder Ausführungsumgebung (150) und/oder die Cloud-Computing-Ressourcen (300) und/oder den Mikrodienst (310) veranlassen, ein Verfahren gemäß einem der Ansprüche 1 bis 11 durchzuführen.

## Revendications

1. Procédé pour exploiter une application logicielle héritée (100), exécuté en exécutant un code à octets dans un environnement informatique ou d'exécution (150), au moyen de l'utilisation de l'application logicielle héritée (100) conjointement avec une fonctionnalité d'agent basée sur l'interception ou sur l'instrumentation (200), s'exécutant sur ou dans l'environnement informatique ou d'exécution (150) de l'application logicielle héritée (100) et étant réalisée en tant que fonctionnalité d'agent générique et configurable (200), étant notamment indépendante de l'application logicielle héritée (100), dans lequel la fonctionnalité d'agent (200) peut intercepter ou instrumenter l'exécution du code à octets de l'application logicielle héritée (101), dans lequel au moyen de l'interception ou de l'instrumentation du code à octets de l'application logicielle héritée (101), la fonctionnalité d'agent (200) peut interagir, dynamiquement et/ou au moment de l'exécution du code à octets (101), avec au moins une procédure (105) ou un appel de procédure dans le cadre de l'application logicielle héritée (100), dans lequel le procédé comprend les étapes suivantes :
- dans une première étape, la fonctionnalité d'agent (200) est déclenchée pour être exploitée conjointement avec l'application logicielle héritée (100) s'exécutant sur ou dans l'environnement informatique ou d'exécution (150) de l'application logicielle héritée (100),
- dans une seconde étape, consécutive à la première étape et au moment de l'exécution de la fonctionnalité d'agent (200), la fonctionnalité d'agent (200) intercepte ou instrumente ou déclenche l'exécution du code à octets de l'application logicielle héritée (101) en ce qui concerne l'au moins une procédure (105) ou l'au moins un appel de procédure au moyen de la fonctionnalité d'agent (200) qui reçoit des données de configuration de déroulement du programme (210) de sorte que, en fonction d'un contenu des données de configuration de déroulement du programme (210), l'environnement informatique ou d'exécution (150) exécute l'au moins une procédure (105) ou l'au moins un appel de procédure de l'application logicielle héritée (100) sous le contrôle de la fonctionnalité d'agent (200), dans lequel la fonctionnalité d'agent (200) reçoit, à partir de l'application logicielle héritée (100) et lors de l'interception de l'au moins une procédure (105) ou l'au moins un appel de procédure pendant l'exécution du code à octets de l'application logicielle héritée (101), un objet de données de demande (205) - lié à l'au moins une procédure (105) ou l'au moins un appel de procédure de l'application logicielle héritée (100) -, dans lequel, en fonction du contenu, au moment de l'exécution de la fonctionnalité d'agent (200), des données de configuration de déroulement du programme (210), l'au moins une procédure (105) ou l'au moins un appel de procédure est exécuté(e) de manière externe à l'application logicielle héritée (100), dans lequel un objet de données de réponse (206) - lié à l'au moins une procédure (105) ou l'au moins un appel de procédure et accepté par l'application logicielle héritée (100) - est généré et fourni à l'application logicielle héritée (100).

2. Procédé selon la revendication 1, dans lequel la fonctionnalité d'agent (200) - qui est indépendante de l'application logicielle héritée (100) - interagit avec les données de configuration de déroulement du programme (210) de sorte que la fonctionnalité d'agent (200) peut être configurée pour l'application logicielle héritée (100), dans lequel en particulier un code de fonctionnalité d'agent (200) identique peut être utilisé - en plus de l'application logicielle héritée (100) en relation avec les données de configuration de déroulement du programme (210) et exécuté dans le cadre de l'environnement informatique ou d'exécution (150) - avec une autre application logicielle héritée (100') en relation avec d'autres données de configuration de déroulement du programme (210') et exécuté dans un autre environnement informatique ou d'exécution (150').

3. Procédé selon l'une des revendications précédentes, dans lequel dans la seconde étape, la fonctionnalité d'agent (200) génère et fournit, à l'application logicielle héritée (100), un autre objet de données de demande (207) - lié à l'au moins une procédure (105) ou l'au moins un appel de procédure de l'application logicielle héritée (100) -, dans lequel, en fonction du contenu, au moment de l'exécution de la fonctionnalité d'agent (200), des données de configuration de déroulement du programme (210), l'au moins une procédure (105) ou l'au moins un appel de procédure est exécuté(e) de manière interne à l'application logicielle héritée (100), et
dans lequel la fonctionnalité d'agent (200) reçoit, à partir de l'application logicielle héritée (100), un autre objet de données de réponse (208) - lié à l'au moins une procédure (105) ou l'au moins un appel de procédure.

4. Procédé selon l'une des revendications précédentes, dans lequel l'application logicielle héritée (100) prend en charge des services d'interception ou des services d'instrumentation, dans lequel en particulier la fonctionnalité d'agent basée sur l'interception ou sur l'instrumentation (200) est basée sur des services d'instrumentation Java, en particulier la bibliothèque ByteBuddy, et est exploitée, conjointement avec l'application logicielle héritée (100), selon un modèle Sidecar,
dans lequel en particulier le comportement de la fonctionnalité d'agent (200) peut être modifié - lors de l'exécution - au moyen d'une modification des données de configuration de déroulement du programme (210).

5. Procédé selon l'une des revendications précédentes, dans lequel
- avant la seconde étape, les données de configuration de déroulement du programme (210) sont initiées ou générées initialement, et/ou
- pendant ou après la seconde étape, les données de configuration de déroulement du programme (210) sont modifiées,
dans lequel, en vue de l'initiation ou de la génération ou de la modification des données de configuration de déroulement du programme (210), l'application logicielle héritée (100) est évaluée ou analysée, en particulier à l'aide d'un logiciel spécialisé.

6. Procédé selon l'une des revendications précédentes, dans lequel une exécution de l'au moins une procédure (105) ou de l'au moins un appel de procédure qui est réalisée de manière interne à l'application logicielle héritée (100) implique - après que la fonctionnalité d'agent (200) a reçu l'objet de données de demande (205) lié à l'au moins une procédure (105) ou l'au moins un appel de procédure, et a fourni l'autre objet de données de demande (207), correspondant à l'objet de données de demande (205), à l'application logicielle héritée (100) -
- l'exécution, en fonction du contenu des données de configuration de déroulement du programme (210), l'au moins une procédure (105) ou l'au moins un appel de procédure de manière interne à l'application logicielle héritée (100),
- la génération et la fourniture, par l'application logicielle héritée (100), de l'autre objet de données de réponse (208) lié à l'au moins une procédure (105) ou l'au moins un appel de procédure à la fonctionnalité d'agent (200), et
- la génération et la fourniture, par la fonctionnalité d'agent (200) et sur la base de l'autre objet de données de réponse (208), de l'objet de données de réponse (206) lié à l'au moins une procédure (105) ou l'au moins un appel de procédure et accepté par l'application logicielle héritée (100) - à l'application logicielle héritée (100).

7. Procédé selon l'une des revendications précédentes, dans lequel une exécution de l'au moins une procédure (105) ou l'au moins un appel de procédure qui est réalisée de manière externe à l'application logicielle héritée (100) implique
- après que la fonctionnalité d'agent (200) a reçu l'objet de données de demande (205) lié à l'au moins une procédure (105) ou l'au moins un appel de procédure - l'utilisation de ressources informatiques externes (300), en particulier un autre environnement informatique ou d'exécution ou des ressources informatiques en nuage, de sorte que, sur la base de l'objet de données de demande (205) lié à l'au moins une procédure (105) ou l'au moins un appel de procédure, une interface de demande ou un objet d'interface (307) est généré(e), par la fonctionnalité d'agent (200), résultant - lors de l'exécution de l'au moins une procédure (105) ou l'au moins un appel de procédure par la ressource informatique externe (300), notamment au moyen d'un microservice (310), - en une interface de réponse ou un objet d'interface (308) reçu(e) par la fonctionnalité d'agent (200), dans lequel l'objet de données de réponse (206) lié à l'au moins une procédure (105) ou l'au moins un appel de procédure et accepté par l'application logicielle héritée (100) est généré sur la base de l'interface de réponse ou de l'objet d'interface (308).

8. Procédé selon l'une des revendications précédentes, dans lequel la fonctionnalité d'agent (200) comprend un convertisseur d'objet de code à octets en objet d'interface (262) et/ou un convertisseur d'objet d'interface en objet de code à octets (263), dans lequel le convertisseur d'objet d'interface en objet de code à octets (262) génère l'interface de demande ou l'objet d'interface (307), ou au moins une partie de celle/celui-ci, sur la base de l'objet de données de demande (205), et dans lequel le convertisseur d'objet d'interface en objet de code à octets (263) génère l'objet de données de réponse (206), ou au moins une partie de celui-ci, sur la base de l'interface de réponse ou de l'objet d'interface (308), dans lequel la fonctionnalité du convertisseur d'objet de code à octets en objet d'interface (262) et/ou du convertisseur d'objet d'interface en objet de code à octets (263) est réalisée d'une manière indépendante de l'application logicielle héritée (100).

9. Procédé selon l'une des revendications précédentes, dans lequel l'interface de demande ou l'objet d'interface (307) et/ou l'interface de réponse ou l'objet d'interface (308) correspond à ou implémente un protocole de transmission ou une interface de programmation d'application de protocole de transmission, notamment l'une ou une pluralité parmi :
- une interface de programmation d'application selon la norme d'interface de programmation d'application de transfert d'état représentatif (Representational State Transfer, REST) impliquant notamment une structure json,
- une interface de programmation d'application selon la norme d'appel de procédure à distance Google (google Remote Procedure Call, gRPC).

10. Procédé selon l'une des revendications précédentes, dans lequel à la place ou en plus de l'exécution de l'au moins une procédure (105) ou l'au moins un appel de procédure de manière externe à l'application logicielle héritée (100), la fonctionnalité d'agent (200) et/ou l'environnement informatique ou d'exécution (150) et/ou le microservice (310) réalise une fonctionnalité de journalisation et/ou une fonctionnalité de surveillance et/ou une fonctionnalité de comparaison de résultats et/ou une fonctionnalité de mesure d'indicateur de performance clé liée à l'au moins une procédure (105) ou l'au moins un appel de procédure de l'application logicielle héritée (100),
dans lequel en particulier l'objet de données de réponse (206) - lié à l'au moins une procédure (105) ou l'au moins un appel de procédure et accepté par l'application logicielle héritée (100), et qui est généré sur la base de l'interface de réponse ou de l'objet d'interface (308) - est généré avant l'exécution réelle de l'au moins une procédure (105) ou l'au moins un appel de procédure au moyen de l'environnement informatique ou d'exécution (150) ou du microservice (310).

11. Procédé selon l'une des revendications précédentes, dans lequel une exécution de l'au moins une procédure (105) ou l'au moins un appel de procédure de manière interne et/ou externe à l'application logicielle héritée (100) et/ou la fonctionnalité de journalisation et/ou la fonctionnalité de surveillance et/ou la fonctionnalité de comparaison de résultats et/ou la fonctionnalité de mesure d'indicateur de performance clé liée à l'au moins une procédure (105) ou l'au moins un appel de procédure est modifiable, au moment de l'exécution de la fonctionnalité d'agent (200), au moyen de la modification des données de configuration de déroulement du programme (210) uniquement, et en particulier pas en modifiant l'application logicielle héritée (100) ni la fonctionnalité d'agent (200).

12. Système pour exploiter une application logicielle héritée (100), exécuté en exécutant un code à octets dans l'environnement informatique ou d'exécution (150), au moyen de l'utilisation de l'application logicielle héritée (100) conjointement avec une fonctionnalité d'agent basée sur l'interception ou sur l'instrumentation (200), s'exécutant sur ou dans l'environnement informatique ou d'exécution (150) de l'application logicielle héritée (100) et étant réalisée en tant que fonctionnalité d'agent générique et configurable (200), étant notamment indépendante de l'application logicielle héritée (100), la fonctionnalité d'agent (200) pouvant intercepter ou instrumenter l'exécution du code à octets de l'application logicielle héritée (101), dans lequel, au moyen de l'interception ou de l'instrumentation du code à octets de l'application logicielle héritée (101), la fonctionnalité d'agent (200) peut interagir, dynamiquement et/ou lors de l'exécution du code à octets (101), avec au moins une procédure (105) ou un appel de procédure dans le cadre de l'application logicielle héritée (100), le système ou l'environnement informatique ou d'exécution (150) étant configuré de telle sorte que :
- la fonctionnalité d'agent (200) est déclenchée pour être exploitée conjointement avec l'application logicielle héritée (100) s'exécutant sur ou dans l'environnement informatique ou d'exécution (150) de l'application logicielle héritée (100),
- au moment de l'exécution de la fonctionnalité d'agent (200), la fonctionnalité d'agent (200) intercepte ou instrumente ou déclenche l'exécution du code à octets de l'application logicielle héritée (101) en ce qui concerne l'au moins une procédure (105) ou l'au moins un appel de procédure au moyen de la fonctionnalité d'agent (200) qui reçoit des données de configuration de déroulement du programme (210) de sorte que, en fonction d'un contenu des données de configuration de déroulement du programme (210), l'environnement informatique ou d'exécution (150) exécute l'au moins une procédure (105) ou l'au moins un appel de procédure de l'application logicielle héritée (100) sous le contrôle de la fonctionnalité d'agent (200), dans lequel la fonctionnalité d'agent (200) reçoit, à partir de l'application logicielle héritée (100) et lors de l'interception de l'au moins une procédure (105) ou l'au moins un appel de procédure pendant l'exécution du code à octets de l'application logicielle héritée (101), un objet de données de demande (205) - lié à l'au moins une procédure (105) ou l'au moins un appel de procédure de l'application logicielle héritée (100) -, dans lequel, en fonction du contenu, au moment de l'exécution de la fonctionnalité d'agent (200), des données de configuration de déroulement du programme (210), l'au moins une procédure (105) ou l'au moins un appel de procédure est exécuté(e) de manière interne ou de manière externe à l'application logicielle héritée (100), et dans lequel un objet de données de réponse (206) - lié à l'au moins une procédure (105) ou l'au moins un appel de procédure et accepté par l'application logicielle héritée (100) - est généré et fourni à l'application logicielle héritée (100).

13. Système (150) selon la revendication 12, dans lequel la fonctionnalité d'agent (200) génère et fournit, à l'application logicielle héritée (100), un autre objet de données de demande (207) - lié à l'au moins une procédure (105) ou l'au moins un appel de procédure de l'application logicielle héritée (100) -, dans lequel, en fonction du contenu, au moment de l'exécution de la fonctionnalité d'agent (200), des données de configuration de déroulement du programme (210), l'au moins une procédure (105) ou l'au moins un appel de procédure est exécuté(e) de manière interne à l'application logicielle héritée (100), et dans lequel la fonctionnalité d'agent (200) reçoit, à partir de l'application logicielle héritée (100), un autre objet de données de réponse (208) - lié à l'au moins une procédure (105) ou l'au moins un appel de procédure.

14. Programme comprenant une fonctionnalité d'agent (200) destinée à être exploitée ou exécutée conjointement avec une application logicielle héritée (100) dans un environnement informatique ou d'exécution (150) au moyen de l'exécution d'un code à octets, la fonctionnalité d'agent (200) étant basée sur l'interception ou sur l'instrumentation et étant réalisée en tant que fonctionnalité d'agent générique et configurable (200), en particulier étant indépendante de l'application logicielle héritée (100), dans lequel la fonctionnalité d'agent (200) peut intercepter ou instrumenter l'exécution du code à octets de l'application logicielle héritée (101), dans lequel, au moyen de l'interception ou de l'instrumentation du code à octets de l'application logicielle héritée (101), la fonctionnalité d'agent (200) peut interagir, dynamiquement et/ou au moment de l'exécution du code à octets (101), avec au moins une procédure (105) ou un appel de procédure dans le cadre de l'application logicielle héritée (100), la fonctionnalité d'agent (200) étant configurée de telle sorte que :
- la fonctionnalité d'agent (200) est déclenchée pour être exploitée conjointement avec l'application logicielle héritée (100) s'exécutant sur ou dans l'environnement informatique ou d'exécution (150) de l'application logicielle héritée (100),
- au moment de l'exécution de la fonctionnalité d'agent (200), la fonctionnalité d'agent (200) intercepte ou instrumente ou déclenche l'exécution du code à octets de l'application logicielle héritée (101) en ce qui concerne l'au au moins une procédure (105) ou l'au moins un appel de procédure au moyen de la fonctionnalité d'agent (200) qui reçoit des données de configuration de déroulement du programme (210) de sorte que, en fonction d'un contenu des données de configuration de déroulement du programme (210), l'environnement informatique ou d'exécution (150) exécute l'au moins une procédure (105) ou l'au moins un appel de procédure de l'application logicielle héritée (100) sous le contrôle de la fonctionnalité d'agent (200), dans lequel la fonctionnalité d'agent (200) reçoit, à partir de l'application logicielle héritée (100) et lors de l'interception de l'au moins une procédure (105) ou l'au moins un appel de procédure pendant l'exécution du code à octets de l'application logicielle héritée (101), un objet de données de demande (205) - lié à l'au moins une procédure (105) ou l'au moins un appel de procédure de l'application logicielle héritée (100) -, dans lequel, en fonction du contenu, au moment de l'exécution de la fonctionnalité d'agent (200), des données de configuration de déroulement du programme (210), l'au moins une procédure (105) ou l'au moins un appel de procédure est exécuté(e) de manière interne ou de manière externe à l'application logicielle héritée (100), et dans lequel un objet de données de réponse (206) - lié à l'au moins une procédure (105) ou l'au moins un appel de procédure et accepté par l'application logicielle héritée (100) - est généré et fourni à l'application logicielle héritée (100).

15. Support lisible par ordinateur comprenant des instructions qui, lorsqu'elles sont exécutées sur un ordinateur et/ou sur un environnement informatique ou d'exécution (150) et/ou sur des ressources d'informatique en nuage (300) et/ou dans le cadre d'un microservice (310), ou en partie sur un environnement informatique ou d'exécution (150) et/ou en partie sur des ressources d'informatique en nuage (300) et/ou en partie dans le cadre d'un microservice (310), amènent l'ordinateur et/ou l'environnement informatique ou d'exécution (150) et/ou les ressources d'informatique en nuage (300) et/ou le microservice (310) à mettre en œuvre un procédé selon l'une des revendications 1 à 11.
